# EUROPEAN PATENT APPLICATION

(11) **EP 4 823 020 A1**
(43) Date of publication of application: **14.10.2026**
(21) Application number: 23960497.8
(22) Date of filing: 06.12.2023
(51) Int. Cl.: H04L 5/00, H04W 52/02

(54) **COMMUNICATION METHOD, APPARATUS, AND DEVICE, CHIP, STORAGE MEDIUM, PRODUCT, AND PROGRAM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Penza, Giancarlo
(86) International application number: PCT/CN2023/136776
(87) International publication number: WO 2025/118184

(57) **Abstract**

The present application provides a communication method, apparatus, and device, a chip, a storage medium, a product, and a program. The method comprises: receiving first configuration information, the first configuration information being used for configuring first uplink resources, and the first uplink resources comprising a first set of uplink resources; and transmitting a first uplink channel or signal by means of a target uplink resource in the first set of uplink resources, the first uplink channel or signal being used for requesting transmission of a first downlink channel or signal on a first downlink cell.

## Description

### TECHNICAL FIELD

The present disclosure relates to the field of communication technologies, and specifically, to a communication method, apparatus, device, chip, storage medium, product, and program.

### BACKGROUND

In the related art, in order to achieve network energy saving, a network device may not send a downlink channel or signal on a downlink cell, and a terminal device also does not receive a downlink channel or signal on the downlink cell. However, in some scenarios, the terminal device needs to receive a downlink channel or signal on a certain downlink cell to achieve specific requirements, for example, the terminal device needs to receive a downlink channel or signal on a timing reference cell to obtain timing synchronization. Based on this, how to let the network device know that the terminal device needs to receive a downlink channel or signal on a certain downlink cell is an urgent problem to be solved.

### SUMMARY

The present disclosure provides a communication method, apparatus, device, chip, storage medium, product, and program.

In a first aspect, the present disclosure provides a communication method, the method including:
receiving first configuration information, wherein the first configuration information is used to configure a first uplink resource, and the first uplink resource includes a first uplink resource set;
sending a first uplink channel or signal through a target uplink resource in the first uplink resource set, wherein the first uplink channel or signal is used to request sending a first downlink channel or signal over a first downlink cell.

In a second aspect, the present disclosure provides a communication method, the method including:
sending first configuration information, wherein the first configuration information is used to configure a first uplink resource, and the first uplink resource includes a first uplink resource set;
detecting a first uplink channel or signal on one or more uplink resources in the first uplink resource set, wherein the first uplink channel or signal is used to request sending a first downlink channel or signal over a first downlink cell.

In a third aspect, the present disclosure provides a communication apparatus, applied to a terminal device, the apparatus including:
a first receiving unit, configured to receive first configuration information, wherein the first configuration information is used to configure a first uplink resource, and the first uplink resource includes a first uplink resource set;
a first sending unit, configured to send a first uplink channel or signal through a target uplink resource in the first uplink resource set, wherein the first uplink channel or signal is used to request sending a first downlink channel or signal over a first downlink cell.

In a fourth aspect, the present disclosure provides a communication apparatus, applied to a network device, the apparatus including:
a second sending unit, configured to send first configuration information, wherein the first configuration information is used to configure a first uplink resource, and the first uplink resource includes a first uplink resource set;
a processing unit, configured to detect a first uplink channel or signal on one or more uplink resources in the first uplink resource set, wherein the first uplink channel or signal is used to request sending a first downlink channel or signal over a first downlink cell.

In a fifth aspect, the present disclosure provides a communication device, the communication device including a processor and a memory. The memory is used to store computer-executable instructions, and the processor is connected to the memory and used to implement the communication method of the first aspect or the second aspect by executing the computer-executable instructions.

In a sixth aspect, the present disclosure provides a chip, used to implement the communication method of the first aspect or the second aspect.

Specifically, the chip includes: a processor, used to call and run a computer program from a memory, so that a device on which the chip is installed executes the communication method of the first aspect or the second aspect.

In a seventh aspect, the present disclosure provides a computer-readable storage medium, the computer-readable storage medium stores a computer program, and when the computer program is executed by at least one processor, it implements the communication method of the first aspect or the second aspect.

In an eighth aspect, the present disclosure provides a computer program product, the computer program product includes a computer storage medium, the computer storage medium stores a computer program, the computer program includes instructions executable by at least one processor, and when the instructions are executed by the at least one processor, they implement the communication method of the first aspect or the second aspect.

In a ninth aspect, the present disclosure provides a computer program, which, when run on a computer, causes the computer to execute the communication method of the first aspect or the second aspect.

The present disclosure provides a communication method. A terminal device can receive first configuration information, wherein the first configuration information is used to configure a first uplink resource, and the first uplink resource includes a first uplink resource set; send a first uplink channel or signal through a target uplink resource in the first uplink resource set, wherein the first uplink channel or signal is used to request sending a first downlink channel or signal over a first downlink cell. In this way, the terminal device sends the first uplink channel or signal through the target uplink resource in the first uplink resource set, which can enable the network device to learn that the terminal device needs to receive the first downlink channel or signal over the first downlink cell, thereby improving network communication performance.

### BRIEF DESCRIPTION OF DRAWINGS

The drawings described here are used to provide a further understanding of the present disclosure and constitute a part of the present disclosure. The exemplary embodiments of the present disclosure and their descriptions are used to explain the present disclosure and do not constitute an improper limitation of the present disclosure. In the drawings:
FIG. 1A is a first schematic architecture diagram of a communication system;
FIG. 1B is a second schematic architecture diagram of a communication system;
FIG. 1C is a third schematic architecture diagram of a communication system;
FIG. 2 is a schematic flowchart of a communication method provided by an embodiment of the present disclosure;
FIG. 3 is a schematic diagram of transmitting downlink channels or signals on multiple downlink cells provided by an embodiment of the present disclosure;
FIG. 4 is a schematic structural composition diagram of a communication apparatus 400 provided by an embodiment of the present disclosure;
FIG. 5 is a schematic structural composition diagram of a communication apparatus 500 provided by an embodiment of the present disclosure;
FIG. 6 is a schematic structural diagram of a communication device provided by an embodiment of the present disclosure;
FIG. 7 is a schematic structural diagram of a chip provided by an embodiment of the present disclosure;
FIG. 8 is a schematic block diagram of a communication system provided by an embodiment of the present disclosure.

### DETAILED DESCRIPTION OF THE EMBODIMENTS

The technical solutions in the embodiments of the present disclosure will be described below with reference to the drawings in the embodiments of the present disclosure. Obviously, the described embodiments are part of the embodiments of the present disclosure, but not all of them. Based on the embodiments in the present disclosure, all other embodiments obtained by persons of ordinary skill in the art without making creative efforts fall within the protection scope of the present disclosure.

Unless otherwise defined, all technical and scientific terms used herein have the same meaning as commonly understood by one of ordinary skill in the technical field of the present disclosure. The terms used herein are only for the purpose of describing the embodiments of the present disclosure and are not intended to limit the present disclosure.

In the following description, reference is made to "some embodiments," which describe a subset of all possible embodiments, but it can be understood that "some embodiments" can be the same subset or different subsets of all possible embodiments, and can be combined with each other without conflict.

It should also be noted that the terms "first/second/third" involved in the embodiments of the present disclosure are only used to distinguish similar objects, and do not represent a specific ordering of the objects. It can be understood that "first/second/third" can be interchanged in a specific order or sequence where permitted, so that the embodiments of the present disclosure described herein can be implemented in an order other than those illustrated or described herein.

In addition, the term "and/or" in the embodiments of the present disclosure describes only an association relationship for describing associated objects, indicating that three relationships may exist. For example, A and/or B can mean: A alone exists, A and B exist simultaneously, and B alone exists. In addition, the character "/" herein generally indicates that the associated objects before and after are in an "or" relationship.

It should be understood that the term "association" mentioned in the embodiments of the present disclosure can indicate a direct or indirect association between two parties, can also indicate a corresponding relationship between the two, or can be a relationship such as indication and being indicated, configuration and being configured, etc.

It should also be understood that the terms "predefined," "agreed by protocol," "predetermined," or "predefined rule" mentioned in the embodiments of the present disclosure can be implemented by pre-storing corresponding codes, tables, or other information that can be used to indicate relevant information in a device (e.g., a terminal device). The present disclosure does not limit the specific implementation manner thereof. For example, predefined may refer to being defined in a protocol. It should also be understood that in the embodiments of the present disclosure, the "protocol" may refer to a standard protocol in the communication field, for example, may include the Long Term Evolution (LTE) protocol, the New Radio (NR) protocol, and related protocols applied in future communication systems, which is not limited in the present disclosure.

The technical solutions recorded in the embodiments of the present disclosure can be arbitrarily combined if there is no conflict. In the description of the present disclosure, "multiple" means two or more, unless otherwise expressly and specifically limited.

The technical solutions of the embodiments of the present disclosure can be applied to various communication systems, for example: an LTE system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also called an NR communication system), or a future communication system (such as a 6G communication system), etc.

In the embodiments of the present disclosure, a terminal device may be a device that provides voice/data to a user, such as a handheld device with a wireless connection function, an in-vehicle device, etc. At present, examples of some terminals include: access terminals, User Equipment (UE), mobile phones, tablet computers, notebook computers, palmtop computers, Mobile Internet Devices (MID), wearable devices, Virtual Reality (VR) devices, Augmented Reality (AR) devices, wireless terminals in industrial control, wireless terminals in self driving, wireless terminals in remote medical surgery, wireless terminals in smart grid, wireless terminals in transportation safety, wireless terminals in smart city, wireless terminals in smart home, cellular phones, cordless phones, Session Initiation Protocol (SIP) phones, wireless local loop (WLL) stations, personal digital assistants (PDAs), handheld devices with wireless communication capabilities, computing devices or other processing devices connected to wireless modems, wearable devices, terminal devices in 5G networks, or terminal devices in future evolved Public Land Mobile Networks (PLMNs), etc. The embodiments of the present disclosure are not limited thereto.

As an example and not a limitation, in the embodiments of the present disclosure, the terminal device may also be a wearable device. Wearable devices can also be called smart wearable devices, which are a general term for devices that apply wearable technology to intelligently design daily wear and develop wearable devices, such as glasses, gloves, watches, clothing, and shoes. Wearable devices are portable devices that are worn directly on the body or integrated into the user's clothes or accessories. Wearable devices are not only a hardware device, but also achieve powerful functions through software support, data interaction, and cloud interaction. Broadly defined smart wearable devices include devices that are fully functional, large in size, and can achieve complete or partial functions without relying on smartphones, such as smart watches or smart glasses, and devices that focus only on a certain type of application function and need to be used in conjunction with other devices such as smartphones, such as various smart bracelets and smart jewelry for physical sign monitoring.

In addition, in the embodiments of the present disclosure, the terminal device may also be a terminal device in an IoT system. IoT is an important part of the future development of information technology, and its main technical feature is to connect objects to the network through communication technology, thereby realizing human-machine interconnection and thing-thing interconnection.

It should be pointed out that the terminal device and the network device (NW) can communicate with each other using a certain air interface technology (such as NR or LTE technology, etc.). The terminal device and the terminal device can also communicate with each other using a certain air interface technology (such as NR or LTE technology, etc.).

It should be noted that the apparatus for realizing the function of the terminal device may be a terminal device, or may be an apparatus capable of supporting the terminal device to realize the function, such as a chip system or a chip, and the apparatus may be installed in the terminal device. In the embodiments of the present disclosure, the chip system may be composed of chips, or may include chips and other discrete devices.

In the embodiments of the present disclosure, the network device may be an evolved Node B (eNB or eNodeB) in an LTE system, or a Next Generation Radio Access Network (NG RAN) device, or a base station (gNB) in an NR system, or a wireless controller in a Cloud Radio Access Network (CRAN), or the network device may be a relay station, an access point, an in-vehicle device, a wearable device, a hub, a switch, a bridge, a router, or a network device in a future evolved PLMN, etc.

To facilitate understanding of the technical solutions of the embodiments of the present disclosure, the related technologies of the embodiments of the present disclosure are described below. The following related technologies, as optional solutions, can be arbitrarily combined with the technical solutions of the embodiments of the present disclosure, and all belong to the protection scope of the embodiments of the present disclosure.

Communication system scenarios may include Terrestrial Networks (TN) and Non-Terrestrial Networks (NTN). Among them, NTN generally uses satellite communication to provide communication services to ground users. NTN systems may include NR-NTN systems and IoT-NTN systems, and may also include other systems, which are not limited in the embodiments of the present disclosure.

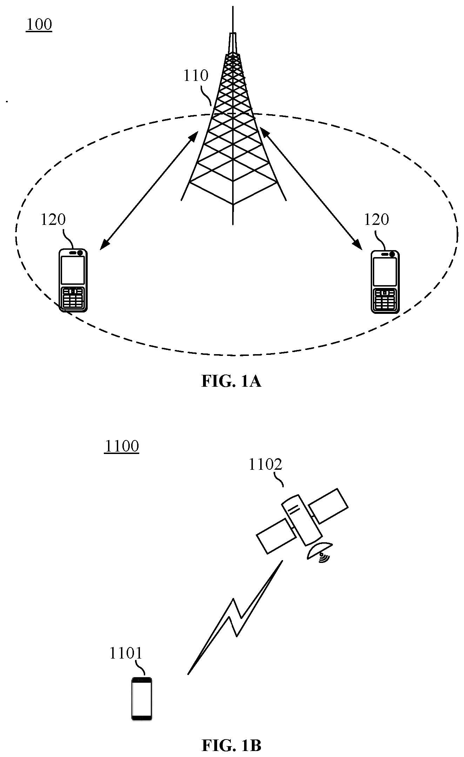

Illustratively, FIG. 1A is a first schematic architecture diagram of a communication system. As shown in FIG. 1A, a communication system 100 may include a network device 110 and a terminal device 120. The network device 110 may be a device that communicates with the terminal device 120 (or called a communication terminal device). The network device 110 may provide communication coverage for a specific geographical area and may communicate with terminal devices (such as the terminal device 120) located within the coverage area.

It should be noted that FIG. 1A shows one network device and two terminal devices. It can be understood that in the embodiments of the present disclosure, the communication system 100 may also include multiple network devices, and the coverage area of each network device may include other numbers of terminal devices, which is not limited in the embodiments of the present disclosure.

Illustratively, FIG. 1B is a second schematic architecture diagram of a communication system. As shown in FIG. 1B, a communication system 1100 may include a terminal device 1101 and a satellite 1102, and the terminal device 1101 and the satellite 1102 can perform wireless communication. The network formed between the terminal device 1101 and the satellite 1102 may also be called NTN. In the architecture of the communication system shown in FIG. 1B, the satellite 1102 may have the function of a base station, and the terminal device 1101 and the satellite 1102 can communicate directly. Under this system architecture, the satellite 1102 may be called a network device.

It should be noted that FIG. 1B shows one terminal device and one satellite. It can be understood that in the embodiments of the present disclosure, the communication system 1100 may also include multiple satellites, and the coverage area of each satellite may include other numbers of terminal devices, which is not limited in the embodiments of the present disclosure.

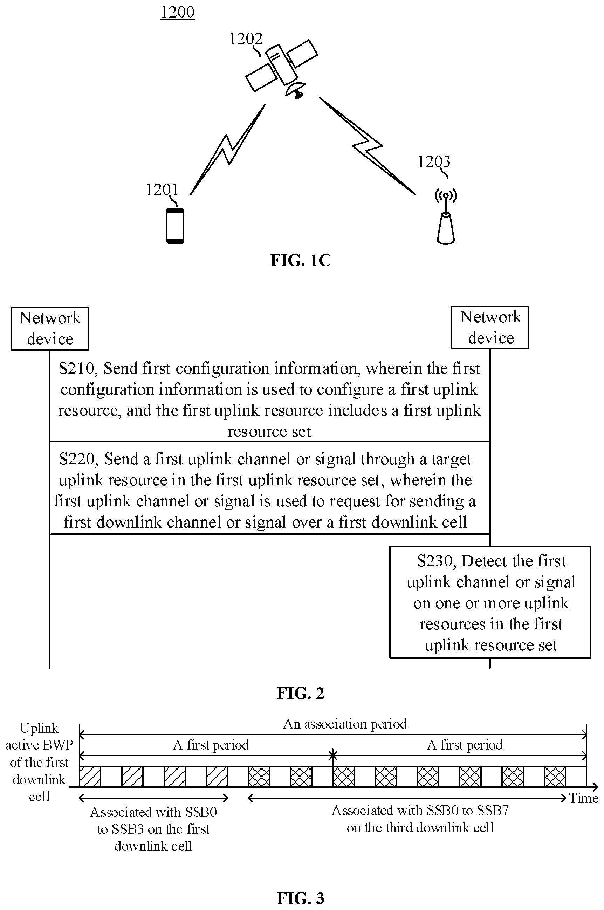

Illustratively, FIG. 1C is a third schematic architecture diagram of a communication system. As shown in FIG. 1C, a communication system 1200 may include a terminal device 1201, a satellite 1202, and a base station 1203. The terminal device 1201 and the satellite 1202 can perform wireless communication, and the satellite 1202 and the base station 1203 can communicate. The network formed between the terminal device 1201, the satellite 1202, and the base station 1203 may also be called NTN. In the architecture of the communication system shown in FIG. 1C, the satellite 1202 may not have the function of a base station, and communication between the terminal device 1201 and the base station 1203 needs to be relayed by the satellite 1202. Under this system architecture, the base station 1203 may be called a network device.

It should be noted that FIG. 1C shows one terminal device, one satellite, and one base station. It can be understood that in the embodiments of the present disclosure, the communication system 1200 may also include multiple network devices, and the coverage area of each network device may include other numbers of terminal devices and satellites, which is not limited in the embodiments of the present disclosure.

In future evolved communication systems such as B5G or 6G, it may also include Distributed Multiple-Input Multiple-Output (Distributed MIMO) (also called distributed antenna system) scenarios and/or Massive MIMO (also called massive antenna array system) scenarios. In some cases, Distributed MIMO and/or Massive MIMO can also support Cell-Free or UE-Centric deployment scenarios. It can be understood that the above scenarios are also applicable to TN and/or NTN.

Network Energy Saving is of great significance for environmental sustainability, reducing environmental impact (e.g., reducing greenhouse gas emissions), and saving operating costs. As 5G gradually becomes popular in various industries and geographical regions, it is necessary to support very high data transmission rates to handle more advanced services and applications (such as Extended Reality (XR)). Network deployment becomes denser, using more antennas, larger bandwidth, and more frequency bands. Considering the environmental impact of 5G, it is necessary to develop controlled, new solutions to enhance network energy saving.

Energy consumption has become a key part of operator's Operational Expenditure (OPEX). Most of the energy consumption comes from the radio access network, more specifically, from Active Antenna Units (AAUs), wherein the share of data centers and optical fiber transmission is relatively small. The power consumption of a radio access can be divided into two parts: the dynamic part can include the power consumption when data is being transmitted or received; the static part can include the power consumption necessary to maintain the necessary operation of the radio access equipment at all times, including the power consumption when no data is being transmitted or received.

Therefore, based on the above objectives, it is necessary to research and develop network energy consumption models, Key Performance Indicators (KPIs), evaluation methods, etc. on the network device side, to determine and study network energy saving technologies in target deployment scenarios. Among them, the defined power consumption model on the terminal device side can be used as a reference. This research should focus on how to achieve more effective dynamic operation and/or semi-static operation, and consider one or more network energy saving technologies applied in the time domain, frequency domain, spatial domain, and power domain, combined with potential terminal device feedback support, potential terminal device assistance information, and technologies such as information exchange or coordination between network interfaces, to achieve more fine-grained data transmission and/or reception adaptation.

It should be noted that this research not only evaluates potential network energy saving gains, but also needs to evaluate and balance the impact on network and user performance by observing KPIs such as spectral efficiency, capacity, user perceived throughput (UPT), latency, terminal device power consumption (UE Power Consumption), complexity, handover performance, call drop rate, initial access performance, and service level agreement (SLA). This research should avoid having a significant impact on the above KPIs.

In the NR system, the initial access process of a terminal device can be completed by detecting a synchronization signal block (SSB or SS/PBCH Block) on a sync raster. During the initial access process, the terminal device can attempt to search for SSBs through predefined possible time-frequency positions of SSBs, and obtain time and frequency synchronization, radio frame timing, and cell ID through the detected SSBs.

After the terminal device accesses the network, the network device can configure multiple serving cells for the terminal device according to the capability of the terminal device, so as to improve the peak data rate of the terminal device. Multiple serving cells of the terminal device can serve the terminal device in the form of Carrier Aggregation (CA) or Dual Connectivity (DC). Among them, multiple serving cells of the terminal device may belong to the same Timing Advance Group (TAG) or may belong to different TAGs. For uplink cells associated with serving cells belonging to the same TAG, the same timing reference cell and the same timing advance value (TA) can be used.

In the NR system, analog beamforming technology is supported, that is, the network device uses beams corresponding to different directions at different times to cover different areas in the cell. In the beam training process, the terminal device needs to measure a group of candidate beams and select a beam that meets a certain threshold as the beam for communication transmission. To improve the robustness of high-frequency analog beam transmission, when it is found that the current beam transmission quality is poor to a certain extent, the terminal device will also actively find a new beam with good link quality and notify the network, thereby re-establishing a high-quality reliable communication link through the new beam.

In the related art, in order to achieve network energy saving, a network device may not send a downlink channel or signal on a downlink cell, and a terminal device also does not receive a downlink channel or signal on the downlink cell. However, in some scenarios, the terminal device needs to receive a downlink channel or signal on a certain downlink cell to achieve specific requirements. Therefore, how to let the network device know that the terminal device needs to receive a downlink channel or signal on a certain downlink cell is an urgent problem to be solved.

Illustratively, among one or more serving cells included in a TAG of the terminal device, there needs to be a timing reference cell so that the terminal device can receive a reference signal (such as SSB) on the timing reference cell to update the TA value of the uplink cell associated with the TAG, thereby achieving timing synchronization. Alternatively, the terminal device needs to measure a reference signal (such as SSB) on the cell to determine a suitable beam as the beam for communication transmission. However, how to make the network device learn that the terminal device needs to receive the reference signal on the timing reference cell to achieve the timing synchronization requirement, so that the reference signal can be sent on the corresponding timing reference cell, currently has no related solution.

Based on this, the embodiments of the present disclosure provide a communication method. A terminal device can receive first configuration information, wherein the first configuration information is used to configure a first uplink resource, and the first uplink resource includes a first uplink resource set; send a first uplink channel or signal through a target uplink resource in the first uplink resource set, wherein the first uplink channel or signal is used to request sending a first downlink channel or signal over a first downlink cell. In this way, the terminal device sends the first uplink channel or signal through the target uplink resource in the first uplink resource set, which can enable the network device to learn that the terminal device needs to receive the first downlink channel or signal over the first downlink cell, thereby improving network communication performance.

Illustratively, in the case where the first downlink cell is a timing reference cell, the network device can configure a first uplink resource for the terminal device, the first uplink resource including a first uplink resource set, so that the terminal device can request, through the target uplink resource in the first uplink resource set, the network device to send an SSB (i.e., the first downlink channel or signal) on the timing reference cell, so that the subsequent terminal device can update the TA value through the SSB sent by the network device, maintain uplink synchronization, and improve network communication performance.

Illustratively, the network device can configure a first uplink resource for the terminal device, the first uplink resource including a first uplink resource set, so that the terminal device can request, through the target uplink resource in the first uplink resource set, the network device to send an SSB (i.e., the first downlink channel or signal) over the first downlink cell, so that the subsequent terminal device can perform measurement through the SSB sent by the network device to ensure that the selected beam direction can guarantee transmission robustness, improving network communication performance.

To facilitate understanding of the technical solutions of the embodiments of the present disclosure, the technical solutions of the present disclosure are described in detail below through specific embodiments. The above related technologies, as optional solutions, can be arbitrarily combined with the technical solutions of the embodiments of the present disclosure, and all belong to the protection scope of the embodiments of the present disclosure. The embodiments of the present disclosure include at least part of the following content.

FIG. 2 is a schematic flowchart of a communication method provided by an embodiment of the present disclosure. As shown in FIG. 2, the method may include the following steps.

S210, a network device sends first configuration information to a terminal device, wherein the first configuration information is used to configure a first uplink resource, and the first uplink resource includes a first uplink resource set.

Correspondingly, the terminal device may receive the first configuration information sent by the network device.

It should be understood that the first uplink resource may be an uplink resource configured on an uplink cell.

Here, the uplink cell may be a secondary cell; or the uplink cell may be a primary cell.

It should be noted that the first uplink resource may be one uplink resource or multiple uplink resources; the first uplink resource set included in the first uplink resource may be one uplink resource or multiple uplink resources, which is not limited in the embodiments of the present disclosure.

It should also be noted that the first uplink resource set may be one uplink resource in the first uplink resource, or multiple uplink resources in the first uplink resource (not all uplink resources), or all uplink resources in the first uplink resource, which is not limited in the embodiments of the present disclosure.

In some embodiments, the first uplink resource may include one or more uplink resources configured periodically, and the period corresponding to the first uplink resource may be denoted as a first period. For example, the first uplink resource may include one or more uplink resources in a periodically configured first period.

In some embodiments, the first uplink resource set may include one or more uplink resources configured periodically, and the period corresponding to the first uplink resource set may be denoted as a first period. For example, the first uplink resource set may include one or more uplink resources in a periodically configured first period.

In some embodiments, any two uplink resources among the multiple uplink resources in the first uplink resource set are different in one or more dimensions of time domain, frequency domain, and code domain.

S220, the terminal device sends a first uplink channel or signal to the network device through a target uplink resource in the first uplink resource set, wherein the first uplink channel or signal is used to request sending a first downlink channel or signal over a first downlink cell.

It should be understood that the target uplink resource may be one uplink resource in the first uplink resource set, or multiple uplink resources in the first uplink resource set (not all uplink resources), or all uplink resources in the first uplink resource set, which is not limited in the embodiments of the present disclosure.

In some embodiments, in the case where the target uplink resource includes multiple uplink resources, the multiple uplink resources in the target uplink resource are used to repeatedly send the first uplink channel or signal.

Through this method, in the case where the target uplink resource includes multiple uplink resources, the terminal device can use the multiple uplink resources in the target uplink resource to repeatedly send the first uplink channel or signal. In this way, the probability of subsequent network device detecting the first uplink channel or signal can be improved, thereby improving the accuracy of blind detection.

It should be noted that the type of the first uplink channel or signal may be predefined, or may be configured by the network device, or may be set by other means, which is not limited in the embodiments of the present disclosure.

Illustratively, the first uplink channel or signal may include one or more of: Physical Random Access Channel (PRACH), Message A (MsgA), Physical Uplink Control Channel (PUCCH), Or configured grant physical uplink shared channel (CG-PUSCH).

Here, MsgA may include PRACH and PUSCH.

Illustratively, MsgA may include PRACH and PUSCH in a two-step random access procedure.

It should be noted that the type of the first downlink channel or signal may be predefined, or may be configured by the network device, or may be set by other means, which is not limited in the embodiments of the present disclosure.

Illustratively, the first downlink channel or signal may include one or more of: SSB, Channel State Information-Reference Signal (CSI-RS), Tracking Reference Signal (TRS), Positioning Reference Signal (PRS), or system message.

Illustratively, CSI-RS may include CSI-RS for CSI acquisition, and/or CSI-RS for Beam Management (BM).

Illustratively, system messages may include one or more of the following: System message Block (SIB) 1, or other system messages except Earthquake and Tsunami Warning System (ETWS)/Commercial Mobile Alert Service (CMAS) messages (SIB6, SIB7, SIB8), ETWS/CMAS messages (SIB6, SIB7, SIB8).

Illustratively, when the first downlink channel or signal includes a system message, the first downlink channel or signal includes one or more of the following: a Physical Downlink Control Channel (PDCCH) for scheduling the system message, or a Physical Downlink Shared Channel (PDSCH) carrying the system message.

In some embodiments, the first uplink resource set is associated with the first downlink cell; and/or, the first uplink resource set is associated with a cell group to which the first downlink cell belongs.

Further, the association manner between the first uplink resource set and the first downlink cell may include one or more of the following two possible implementation manners.

A possible implementation manner, the first uplink resource set is associated with the first downlink cell.

Illustratively, the first configuration information includes an identifier of the first downlink cell; and/or, the first configuration information is used to determine an association relationship between the first uplink resource set and the first downlink cell.

Through this method, in the case where the first uplink resource set is associated with the first downlink cell, since the subsequent network device needs to perform blind detection processing (such as detecting the first uplink channel or signal) on the uplink cell configured with the first uplink resource set, the uplink cell configured with the first uplink resource set can be turned on, while other uplink cells without service requirements are turned off, thereby saving power and avoiding resource waste.

Another possible implementation manner, the first uplink resource set is associated with the cell group to which the first downlink cell belongs.

Illustratively, the first configuration information is used to determine the cell group to which the first downlink cell belongs.

For example, the first configuration information includes an identifier of the cell group to which the first downlink cell belongs; and/or, the first configuration information is used to determine an association relationship between the first uplink resource set and each downlink cell in the cell group to which the first downlink cell belongs; and/or, the first configuration information is used to determine an association relationship between the first uplink resource set and the first downlink cell in the cell group to which the first downlink cell belongs.

Through this method, in the case where the first uplink resource set is associated with the cell group to which the first downlink cell belongs, since the subsequent network device needs to perform blind detection processing (such as detecting the first uplink channel or signal) on the uplink cell configured with the first uplink resource set, the uplink cell configured with the first uplink resource set can be turned on, while other uplink cells without service requirements are turned off, thereby saving power and avoiding resource waste.

Based on the above two possible implementation manners, in some embodiments, the first configuration information may be used to determine one or more of: an identifier of the first downlink cell, a cell group to which the first downlink cell belongs, or an association relationship between the first uplink resource set and the first downlink cell.

Through this method, in the case where the first configuration information is used to determine one or more of the above information, the first uplink resource set can be associated with the first downlink cell. Since the subsequent network device needs to perform blind detection processing (such as detecting the first uplink channel or signal) on the uplink cell configured with the first uplink resource set, the uplink cell configured with the first uplink resource set can be turned on, while other uplink cells without service requirements are turned off, thereby saving power and avoiding resource waste.

In some embodiments, a quasi co-location (QCL) reference of the first downlink channel or signal is determined based on a second downlink channel or signal, wherein the second downlink channel or signal is a downlink channel or signal on a second downlink cell.

Illustratively, the second downlink cell is the same as the first downlink cell.

Illustratively, the second downlink cell is different from the first downlink cell.

Illustratively, the second downlink cell is different from the first downlink cell and the second downlink cell and the first downlink cell belong to the same cell group.

Illustratively, the second downlink cell and the first downlink cell belong to different cell groups.

In some embodiments, the second downlink cell is a primary cell.

Through this method, in the case where the second downlink cell is the primary cell, the QCL reference of other downlink channels or signals (such as the first downlink channel or signal, and also the third downlink channel or signal described below) can be determined based on the second downlink channel or signal on the second downlink cell.

It should be noted that the second downlink channel or signal may be a downlink channel or signal that the terminal device has already received on the second downlink cell, or may be a downlink channel or signal configured for the terminal device on the second downlink cell.

It should also be noted that in the embodiments of the present disclosure, a cell group may be a cell group configured by the network device, or may be a TAG configured by the network device, which is not limited in the embodiments of the present disclosure.

It should also be noted that in the case where the second downlink cell and the first downlink cell belong to the same cell group, the second downlink cell may be the same as the first downlink cell, or the second downlink cell may be different from the first downlink cell, which is not limited in the embodiments of the present disclosure.

Through this method, in the case where the QCL reference of the first downlink channel or signal is determined based on the second downlink channel or signal, it is possible to enable the subsequent network device to know the beam direction of the first downlink channel or signal when sending the first downlink channel or signal.

In some embodiments, the second downlink channel or signal may include a synchronization signal block SSB on the second downlink cell; or the second downlink channel or signal may include a downlink reference signal on the second downlink cell configured by first transmission configuration indication (TCI) state configuration information.

Here, the downlink reference signal on the second downlink cell configured by the first TCI state configuration information may include an SSB or a channel state information reference signal CSI-RS.

It should be noted that the first TCI state configuration information may be configured.

Illustratively, the first TCI state configuration information may be configured by the first configuration information (e.g., the first configuration information includes the first TCI state configuration information), or may be configured by other configuration information, which is not limited in the embodiments of the present disclosure.

For example, the first configuration information may include one or more first TCI state identifiers; or the first configuration information may include one or more first TCI states.

In some embodiments, the first TCI state configuration information may be not configured, and in this case, the second downlink channel or signal may include an SSB on the second downlink cell.

That is, the first configuration information may include the first TCI state configuration information; or in the case where the first TCI state configuration information is not configured, the second downlink channel or signal may include an SSB on the second downlink cell.

It should be noted that the SSB on the second downlink cell may be configured, or may be determined based on system message of the second downlink cell.

Illustratively, the SSB on the second downlink cell may be configured by the first configuration information (e.g., the first configuration information is used to configure the SSB on the second downlink cell), or may be configured by other configuration information, which is not limited in the embodiments of the present disclosure.

In some embodiments, the SSB on the second downlink cell may be not configured, and in this case, the SSB on the second downlink cell may be determined based on the system message of the second downlink cell.

That is, the first configuration information may be used to configure the SSB on the second downlink cell; or in the case where the SSB on the second downlink cell is not configured, the SSB on the second downlink cell may be determined based on the system message of the second downlink cell.

It should be understood that in the embodiments of the present disclosure, the terminal device may first determine the QCL reference of the first downlink channel or signal based on the second downlink channel or signal, and then determine the target uplink resource based on the QCL reference of the first downlink channel or signal, so that it can request the network device to send the first downlink channel or signal over the first downlink cell according to the QCL reference of the first downlink channel or signal.

It should also be understood that in the embodiments of the present disclosure, QCL means that the large-scale parameters of the channel experienced by a symbol on a certain antenna port can be inferred from the channel experienced by a symbol on another antenna port. The large-scale parameters may include delay spread, average delay, Doppler spread, Doppler shift, average gain, and spatial reception parameters.

Definitions of different QCL type configurations are as follows:
'QCL-TypeA': {Doppler Shift, Doppler Spread, Average Delay, Delay Spread};
'QCL-TypeB': {Doppler Shift, Doppler Spread};
'QCL-TypeC': {Doppler Shift, Average Delay};
'QCL-TypeD': {Spatial Rx Parameter}.

In the embodiments of the present disclosure, the QCL reference of the first downlink channel or signal may correspond to one or two of the above QCL types. The QCL type corresponding to the QCL reference of the first downlink channel or signal may be predefined, or may be configured by the first configuration information (e.g., the first configuration information is used to configure the QCL type corresponding to the QCL reference of the first downlink channel or signal), or may be configured by other configuration information, which is not limited in the embodiments of the present disclosure.

Illustratively, in the case where the second downlink channel or signal includes an SSB on the second downlink cell, the QCL type corresponding to the QCL relationship between the first downlink channel or signal and the second downlink channel or signal is predefined. For example, it may be predefined that the QCL type corresponding to the QCL relationship between the first downlink channel or signal and the second downlink channel or signal is 'QCL-TypeA' and/or 'QCL-TypeD'.

Illustratively, the QCL type corresponding to the QCL relationship between the first downlink channel or signal and the second downlink channel or signal is configured by the network device. For example, the first configuration information is also used to configure the QCL type corresponding to the QCL relationship between the first downlink channel or signal and the second downlink channel or signal as 'QCL-TypeA' and/or 'QCL-TypeD'. For another example, in the case where the second downlink channel or signal includes a downlink reference signal on the second downlink cell configured by the first TCI state configuration information, the QCL type corresponding to the QCL relationship between the first downlink channel or signal and the second downlink channel or signal is configured by the first TCI state configuration information.

In the embodiments of the present disclosure, a TCI state may include information of a QCL reference. One TCI state may be associated with one TCI state ID. Each TCI state may include one or two downlink channels or signals, respectively serving as one or two types of reference sources.

Illustratively, one TCI state ID may be used to identify one TCI state.

It should be noted that it is assumed that a TCI state may include information 1 of the QCL reference and information 2 of the QCL reference. Information of one QCL reference may include the following:

Configuration of QCL type, which may be one of QCL-TypeA, QCL-TypeB, QCL-TypC, QCL-TypeD;

Configuration of downlink channel or signal, including the cell ID where the downlink channel or signal is located, the bandwidth part (BWP) ID, and the index associated with the downlink channel or signal (which may be a CSI-RS resource ID or an SSB index).

Illustratively, in information 1 of the QCL reference and information 2 of the QCL reference, the QCL type of one of the QCL reference information may be one of QCL-TypeA, QCL-TypeB, QCL-TypC, and the QCL type of the other QCL reference information (if configured) may be QCL-TypeD.

Illustratively, the QCL type associated with information 1 of the QCL reference may be one of QCL-TypeA, QCL-TypeB, QCL-TypeC, and if information 2 of the QCL reference is configured, then the QCL type associated with information 2 of the QCL reference is QCL-TypeD.

Table 1 shows an example of a TCI state including information of one QCL reference. In Table 1, four TCI states are configured on the second downlink cell, and each TCI state may include one second downlink channel or signal.

**Table 1**

| TCI state ID | Configuration of downlink channel or signal | Configuration of downlink channel or signal |
|---|---|---|
| 0 | Second downlink channel or signal 1 | QCL-TypeA |
| 1 | Second downlink channel or signal 2 | QCL-TypeA |
| 2 | Second downlink channel or signal 3 | QCL-TypeA |
| 3 | Second downlink channel or signal 4 | QCL-TypeA |

Table 2 shows an example of a TCI state including information of two QCL references. In Table 2, four TCI states are configured on the second downlink cell, and each TCI state includes two second downlink channels or signals.

**Table 2**

| TCI state ID | Configuration of downlink channel or signal 1 | Configuration of QCL type 1 | Configuration of downlink channel or signal 2 | Configurat ion of QCL type 2 |
|---|---|---|---|---|
| 0 | Second downlink channel or signal 11 | QCL-TypeA | Second downlink channel or signal 12 | QCL-Type D |
| 1 | Second downlink channel or signal 21 | QCL-TypeA | Second downlink channel or signal 22 | QCL-Type D |
| 2 | Second downlink channel or signal 31 | QCL-TypeA | Second downlink channel or signal 32 | QCL-Type D |
| 3 | Second downlink channel or signal 41 | QCL-TypeA | Second downlink channel or signal 42 | QCL-Type D |

In some embodiments, the QCL reference of the first downlink channel or signal is determined based on one or more of the following:
a first mapping relationship between an index associated with the first downlink channel or signal and one or more uplink resources in the first uplink resource set;
a second mapping relationship between an index associated with the second downlink channel or signal and one or more uplink resources in the first uplink resource set;
a third mapping relationship between an index associated with the first downlink channel or signal and an index associated with the second downlink channel or signal; or
the first configuration information.

It should be noted that the first mapping relationship may be predefined, or may be configured by the network device (e.g., the network device configures the first mapping relationship through the first configuration information), or may be set by other means, which is not limited in the embodiments of the present disclosure.

It should also be noted that the second mapping relationship may be predefined, or may be configured by the network device (e.g., the network device configures the second mapping relationship through the first configuration information), or may be set by other means, which is not limited in the embodiments of the present disclosure.

It should also be noted that the third mapping relationship may be predefined, or may be configured by the network device (e.g., the network device configures the third mapping relationship through the first configuration information), or may be set by other means, which is not limited in the embodiments of the present disclosure.

It should be understood that the first mapping relationship between the index associated with the first downlink channel or signal and the one or more uplink resources in the first uplink resource set is one-to-one, or one-to-many, or many-to-one.

Illustratively, the first downlink channel or signal includes one or more SSBs, and the first mapping relationship between the index associated with the one or more SSBs and the one or more uplink resources in the first uplink resource set is one-to-one, or one-to-many, or many-to-one.

Illustratively, the first downlink channel or signal includes one or more downlink reference signals on the second downlink cell configured by the first TCI state configuration information, and the first mapping relationship between the index associated with the one or more first TCI state configuration information and the one or more uplink resources in the first uplink resource set is one-to-one, or one-to-many, or many-to-one.

It should also be understood that the second mapping relationship between the index associated with the second downlink channel or signal and the one or more uplink resources in the first uplink resource set is one-to-one, or one-to-many, or many-to-one.

It should also be understood that the third mapping relationship between the index associated with the first downlink channel or signal and the index associated with the second downlink channel or signal is one-to-one, or one-to-many, or many-to-one.

Further, in some embodiments, the index associated with the first downlink channel or signal is an index which is associated with the target uplink resource and determined based on the first mapping relationship; or
the QCL reference of the first downlink channel or signal is an index associated with the second downlink channel or signal which is associated with the target uplink resource and determined based on the second mapping relationship; or
the QCL reference of the first downlink channel or signal is an index which is associated with the second downlink channel or signal and determined based on the third mapping relationship; or
the QCL reference of the first downlink channel or signal is configured by the first configuration information.

Based on this, in the embodiments of the present disclosure, the manner of determining the QCL reference of the first downlink channel or signal may include one or more of the following possible implementation manners.

A possible implementation manner, the QCL reference of the first downlink channel or signal may be determined based on the first mapping relationship between the index associated with the first downlink channel or signal and the one or more uplink resources in the first uplink resource set.

Further, the index associated with the first downlink channel or signal is an index which is associated with the target uplink resource and determined based on the first mapping relationship.

Here, the one or more uplink resources in the first uplink resource set include the target uplink resource.

Illustratively, it is assumed that based on the first mapping relationship, it is obtained that the index associated with the first downlink channel or signal associated with uplink resource 1 in the first uplink resource set is 1. The terminal device selects uplink resource 1 as the target uplink resource to send the first uplink channel or signal, thereby requesting the network device to send the first downlink channel or signal with associated index 1 over the first downlink cell. Correspondingly, if the network device receives the first uplink channel or signal through uplink resource 1, the network device may send the first downlink channel or signal with associated index 1 over the first downlink cell.

Through this method, in the case where the QCL reference of the first downlink channel or signal is determined based on the first mapping relationship between the index associated with the first downlink channel or signal and the one or more uplink resources in the first uplink resource set, it is possible to enable the subsequent network device to know the beam direction of the first downlink channel or signal when sending the first downlink channel or signal.

Another possible implementation manner, the QCL reference of the first downlink channel or signal may be determined based on the second mapping relationship between the index associated with the second downlink channel or signal and the one or more uplink resources in the first uplink resource set.

Further, the QCL reference of the first downlink channel or signal is an index associated with the second downlink channel or signal which is associated with the target uplink resource and determined based on the second mapping relationship.

That is, the first downlink channel or signal and the second downlink channel or signal associated with the target uplink resource have a QCL relationship.

Here, the one or more uplink resources in the first uplink resource set include the target uplink resource.

It should be noted that in the case where the second downlink channel or signal includes an SSB on the second downlink cell, the QCL reference of the first downlink channel or signal is an index associated with the SSB on the second downlink cell associated with the target uplink resource. That is, the first downlink channel or signal and the SSB on the second downlink cell associated with the target uplink resource have a QCL relationship.

Illustratively, it is assumed that the SSBs on the second downlink cell include SSB 0 and SSB 1, and the first uplink resource set includes uplink resource 0 and uplink resource 1. Based on the second mapping relationship, it can be determined that SSB 0 on the second downlink cell is associated with uplink resource 0, and SSB 1 is associated with uplink resource 1. If the terminal device wants to request the network device to send, over the first downlink cell, a first downlink channel or signal that has a QCL relationship with SSB 1 on the second downlink cell, it may select uplink resource 1 as the target uplink resource to send the first uplink channel or signal. Correspondingly, if the network device receives the first uplink channel or signal through uplink resource 1, the network device may send, over the first downlink cell, a first downlink channel or signal that has a QCL relationship with SSB 1 on the second downlink cell.

It should be noted that in the case where the second downlink channel or signal includes a downlink reference signal on the second downlink cell configured by the first TCI state configuration information, the QCL reference of the first downlink channel or signal is an index associated with the first TCI state configuration information associated with the target uplink resource determined based on the second mapping relationship. That is, the first downlink channel or signal and the first TCI state configuration information associated with the target uplink resource have a QCL relationship.

Illustratively, it is assumed that the first TCI state configuration information includes TCI state 0 and TCI state 1, and the first uplink resource set includes uplink resource 0 and uplink resource 1. Based on the second mapping relationship, it can be determined that TCI state 0 configured by the first TCI state configuration information is associated with uplink resource 0, and TCI state 1 is associated with uplink resource 1. If the terminal device wants to request the network device to send, over the first downlink cell, a first downlink channel or signal that has a QCL relationship with TCI state 1 configured by the first TCI state configuration information, it may select uplink resource 1 as the target uplink resource to send the first uplink channel or signal. Correspondingly, if the network device receives the first uplink channel or signal through uplink resource 1, the network device may send, over the first downlink cell, a first downlink channel or signal that has a QCL relationship with TCI state 1.

Through this method, in the case where the QCL reference of the first downlink channel or signal is determined based on the second mapping relationship between the index associated with the second downlink channel or signal and the one or more uplink resources in the first uplink resource set, it is possible to enable the subsequent network device to know the beam direction of the first downlink channel or signal when sending the first downlink channel or signal.

Another possible implementation manner, the QCL reference of the first downlink channel or signal may be determined based on the third mapping relationship between the index associated with the first downlink channel or signal and the index associated with the second downlink channel or signal.

Further, the QCL reference of the first downlink channel or signal is an index which is associated with the second downlink channel or signal and determined based on the third mapping relationship.

That is, the first downlink channel or signal and the second downlink channel or signal determined based on the third mapping relationship have a QCL relationship.

It should be noted that in the case where the second downlink channel or signal includes an SSB on the second downlink cell, the QCL reference of the first downlink channel or signal is an index associated with the SSB on the second downlink cell determined based on the third mapping relationship. That is, the first downlink channel or signal and the SSB on the second downlink cell determined based on the third mapping relationship have a QCL relationship.

Illustratively, it is assumed that the SSBs on the second downlink cell include SSB 0 and SSB 1, and it is assumed that based on the third mapping relationship, the index associated with the SSB on the second downlink cell is determined, and the obtained SSB on the second downlink cell is SSB 1. The terminal device may send the first uplink channel or signal, thereby requesting the network device to send, over the first downlink cell, a first downlink channel or signal that has a QCL relationship with SSB 1 on the second downlink cell. Correspondingly, if the network device receives the first uplink channel or signal, the network device may send, over the first downlink cell, a first downlink channel or signal that has a QCL relationship with SSB 1 on the second downlink cell.

It should be noted that in the case where the second downlink channel or signal includes a downlink reference signal on the second downlink cell configured by the first TCI state configuration information, the QCL reference of the first downlink channel or signal is an index associated with the first TCI state configuration information determined based on the third mapping relationship. That is, the first downlink channel or signal and the first TCI state configuration information determined based on the third mapping relationship have a QCL relationship.

Illustratively, it is assumed that the first TCI state configuration information includes TCI state 0 and TCI state 1, and it is assumed that based on the third mapping relationship, the index associated with the first TCI state configuration information is determined, and the obtained first TCI state configuration information is TCI state 1. The terminal device may send the first uplink channel or signal, thereby requesting the network device to send, over the first downlink cell, a first downlink channel or signal that has a QCL relationship with TCI state 1. Correspondingly, if the network device receives the first uplink channel or signal, the network device may send, over the first downlink cell, a first downlink channel or signal that has a QCL relationship with TCI state 1.

Through this method, in the case where the QCL reference of the first downlink channel or signal is determined based on the third mapping relationship between the index associated with the first downlink channel or signal and the index associated with the second downlink channel or signal, it is possible to enable the subsequent network device to know the beam direction of the first downlink channel or signal when sending the first downlink channel or signal.

Another possible implementation manner, the QCL reference of the first downlink channel or signal may be determined based on the first configuration information.

It should be noted that the first configuration information may indirectly determine the QCL reference of the first downlink channel or signal.

Illustratively, the first configuration information may configure one or more of the following: the first mapping relationship between the index associated with the first downlink channel or signal and the one or more uplink resources in the first uplink resource set; the second mapping relationship between the index associated with the second downlink channel or signal and the one or more uplink resources in the first uplink resource set; or the third mapping relationship between the index associated with the first downlink channel or signal and the index associated with the second downlink channel or signal. Thus, the QCL reference of the first downlink channel or signal can be determined based on one or more of the first mapping relationship, the second mapping relationship, or the third mapping relationship.

Illustratively, the first configuration information may configure the first uplink resource set to be associated with the first downlink cell. Thus, when the network device receives the first uplink channel or signal through one or more uplink resources in the first uplink resource set, the network device sends the first downlink channel or signal over the first downlink cell. Here, the QCL reference of the first downlink channel or signal is all candidate QCL references. For example, if the QCL reference of the first downlink channel or signal includes an SSB set on the second downlink cell, and the SSB set includes SSB 0, SSB 1, SSB 2, and SSB 3, then the network device sends, over the first downlink cell, first downlink channels or signals that have QCL relationships with SSB 0, SSB 1, SSB 2, and SSB 3 on the second downlink cell, respectively.

It should be noted that the first configuration information may directly determine the QCL reference of the first downlink channel or signal.

Illustratively, the QCL reference of the first downlink channel or signal is configured by the first configuration information. For example, the first configuration information configures the QCL reference of the first downlink channel or signal to be SSB 1 on the second downlink cell; when the network device receives the first uplink channel or signal through one or more uplink resources in the first uplink resource set, the network device sends, over the first downlink cell, a first downlink channel or signal that has a QCL relationship with SSB 1 on the second downlink cell. For another example, the first configuration information configures the QCL reference of the first downlink channel or signal to be a TCI state configured by the first TCI state configuration information; when the network device receives the first uplink channel or signal through one or more uplink resources in the first uplink resource set, the network device sends the first downlink channel or signal over the first downlink cell according to the TCI state configured by the first TCI state configuration information.

Illustratively, the first configuration information configures the QCL reference of the first downlink channel or signal to be an SSB on the second downlink cell. When the network device receives the first uplink channel or signal through one or more uplink resources in the first uplink resource set, the network device sends, over the first downlink cell, first downlink channels or signals that have QCL relationships with SSBs in the SSB set on the second downlink cell. Here, the SSB set on the second downlink cell is configured by the network device or is determined based on system message of the second downlink cell.

Through this method, in the case where the QCL reference of the first downlink channel or signal is determined based on the first configuration information, it is possible to enable the subsequent network device to know the beam direction of the first downlink channel or signal when sending the first downlink channel or signal.

In some embodiments, when the first downlink cell and the second downlink cell are the same cell, the first configuration information may not need to configure the QCL reference of the first downlink channel or signal. For example, in this case, the QCL reference of the first downlink channel or signal may be preset to be an SSB over the first downlink cell. When the network device receives the first uplink channel or signal through one or more uplink resources in the first uplink resource set, the network device sends, over the first downlink cell, first downlink channels or signals that have QCL relationships with SSBs in the SSB set over the first downlink cell. Here, the SSB set over the first downlink cell may be determined based on system message of the first downlink cell.

In some embodiments, in the case of determining a mapping relationship (such as the first mapping relationship, or the third mapping relationship), indexes associated with the first downlink channel or signal are sorted in ascending order of indexes.

Further, taking the first mapping relationship as an example, the first mapping relationship is: a first mapping relationship between indexes associated with the first downlink channel or signal and one or more uplink resources in the first uplink resource set; within one association period, the indexes associated with the first downlink channel or signal are sorted in ascending order of indexes.

Here, one association period includes an integer number of first periods, and the first period is the period of the first uplink resource set.

It should be noted that the length of one association period may be predefined, or may be configured by the network device, or may be set by other means, which is not limited in the embodiments of the present disclosure.

It should also be noted that within one association period, the indexes associated with the first downlink channel or signal are sequentially mapped to the one or more uplink resources in the first uplink resource set in ascending order of indexes.

Illustratively, the first downlink channel or signal may include one or more SSBs. Within one association period, starting from system frame number (SFN) 0, the indexes associated with the one or more SSBs are sequentially mapped to the one or more uplink resources in the first uplink resource set in ascending order of indexes.

Further, the indexes associated with the one or more SSBs are mapped to valid uplink resources in the first uplink resource set; or the indexes associated with the one or more SSBs are mapped to configured uplink resources in the first uplink resource set.

Through this method, in the case where the indexes associated with the first downlink channel or signal are sorted in ascending order of indexes, the index associated with the first downlink channel or signal associated with the target uplink resource can be quickly obtained.

In some embodiments, in the case of determining a mapping relationship (such as the second mapping relationship, or the third mapping relationship), indexes associated with the second downlink channel or signal are sorted in ascending order of indexes.

Further, taking the second mapping relationship as an example, the second mapping relationship is: a mapping relationship between indexes associated with the second downlink channel or signal and one or more uplink resources in the first uplink resource set within one association period; within one association period, the indexes associated with the second downlink channel or signal are sorted in ascending order of indexes.

It should be noted that within one association period, the indexes associated with the second downlink channel or signal are sequentially mapped to the one or more uplink resources in the first uplink resource set in ascending order of indexes.

Illustratively, the second downlink channel or signal may include one or more SSBs. Within one association period, starting from SFN 0, the indexes associated with the one or more SSBs are sequentially mapped to the one or more uplink resources in the first uplink resource set in ascending order of indexes.

Further, the indexes associated with the one or more SSBs are mapped to valid uplink resources in the first uplink resource set; or the indexes associated with the one or more SSBs are mapped to configured uplink resources in the first uplink resource set.

Illustratively, the second downlink channel or signal may include one or more downlink reference signals on the second downlink cell configured by the first TCI state configuration information. Within one association period, starting from SFN 0, the indexes associated with the one or more first TCI state configuration information are sequentially mapped to the one or more uplink resources in the first uplink resource set in ascending order of indexes.

Further, the indexes associated with the one or more first TCI state configuration information are mapped to valid uplink resources in the first uplink resource set; or the indexes associated with the one or more first TCI state configuration information are mapped to configured uplink resources in the first uplink resource set.

Through this method, in the case where the indexes associated with the second downlink channel or signal are sorted in ascending order of indexes, the index associated with the second downlink channel or signal associated with the target uplink resource can be quickly obtained.

In some embodiments, in the case of determining a mapping relationship (such as the first mapping relationship, or the second mapping relationship), the sorting of the one or more uplink resources in the first uplink resource set includes one or more of the following:
sorting in ascending order of indexes in the code domain;
sorting in ascending order of indexes in the frequency domain;
sorting in ascending order of indexes in the time domain; or
sorting in ascending order of indexes of the first period.

Illustratively, the sorting of the one or more uplink resources in the first uplink resource set is: if there are multiple code domain resources on one uplink transmission occasion, sort in ascending order of indexes in the code domain; if there are multiple uplink transmission occasions in the frequency domain at the same time domain position, sort in ascending order of indexes in the frequency domain; if there are multiple uplink transmission occasions in the time domain within one first period, sort in ascending order of indexes in the time domain; if there are multiple first periods within one association period, sort in ascending order of indexes of the first periods.

For example, it is assumed that the first uplink resource set includes one or more PRACH resources. The sorting of the one or more PRACH resources is: on one RO (PRACH transmission occasion), sort in ascending order of PRACH sequence indexes; if there are multiple ROs in the frequency domain at the same time domain position, sort in ascending order of indexes in the frequency domain; if there are multiple ROs in the time domain within the PRACH resource configuration period (i.e., the first period), sort in ascending order of indexes in the time domain; if there are multiple PRACH resource configuration periods within one association period, sort in ascending order of indexes of the PRACH resource configuration periods.

For another example, the first uplink resource set includes one or more PUCCH resources. The sorting of the one or more PUCCH resources is: on one PUCCH transmission occasion, sort in ascending order of PUCCH sequence indexes; if there are multiple PUCCH transmission occasions in the frequency domain at the same time domain position, sort in ascending order of indexes in the frequency domain; if there are multiple PUCCH transmission occasions in the time domain within the PUCCH resource configuration period (i.e., the first period), sort in ascending order of indexes in the time domain; if there are multiple PUCCH resource configuration periods within one association period, sort in ascending order of indexes of the PUCCH resource configuration periods.

For another example, the first uplink resource set includes one or more PUSCH resources. The sorting of the one or more PUSCH resources is: on one PUSCH transmission occasion, sort in ascending order of Demodulation Reference Signal (DMRS) resource indexes, where, when sorting in ascending order of DMRS resource indexes, in the case of the same DMRS sequence index, sort in ascending order of DMRS antenna port numbers; sort in ascending order of DMRS sequence indexes; within the PUSCH resource configuration period (i.e., the first period), sort in ascending order of indexes in the time domain; if there are multiple PUSCH resource configuration periods within one association period, sort in ascending order of indexes of the PUSCH resource configuration periods.

Through this method, in the case of ordering the one or more uplink resources in the first uplink resource set, the target uplink resource associated with the index associated with the downlink channel or signal (such as the first downlink channel or signal, or the second downlink channel or signal) can be quickly obtained.

In some embodiments, in the case where the second downlink cell is different from the first downlink cell, the first configuration information is used to determine one or more of: an identifier of the second downlink cell, a cell group to which the second downlink cell belongs, or an association relationship between the first downlink cell and the second downlink cell.

Through this method, the terminal device can learn one or more of the identifier of the second downlink cell, the cell group to which the second downlink cell belongs, or the association relationship between the first downlink cell and the second downlink cell, thereby enabling the terminal device to determine the cell identifier of the second downlink cell, and further determine the QCL reference of the first downlink channel or signal according to the second downlink channel or signal on the second downlink cell.

S230, the network device detects the first uplink channel or signal on one or more uplink resources in the first uplink resource set.

In some embodiments, in a case where the network device detects the first uplink channel or signal on the target uplink resource in the first uplink resource set, it may send the first downlink channel or signal over the first downlink cell.

Through this method, in the case where the first downlink cell is a timing reference cell, after the network device sends an SSB (i.e., the first downlink channel or signal) on the timing reference cell, the subsequent terminal device can update the TA value through the SSB, maintain uplink synchronization, and improve network communication performance; or after the network device sends an SSB (i.e., the first downlink channel or signal) over the first downlink cell, the subsequent terminal device can perform measurement through the SSB to ensure that the selected beam direction can guarantee transmission robustness, improving network communication performance.

In some embodiments, the first configuration information is also used to configure a second uplink resource, and the second uplink resource may include a second uplink resource set; the method may further include: the terminal device sends a second uplink channel or signal through one or more uplink resources in the second uplink resource set, wherein the second uplink channel or signal is used to request sending a third downlink channel or signal over a third downlink cell.

In other embodiments, the first uplink resource may further include a second uplink resource set; the method may further include: the terminal device sends a second uplink channel or signal through one or more uplink resources in the second uplink resource set, wherein the second uplink channel or signal is used to request sending a third downlink channel or signal over a third downlink cell.

Correspondingly, the network device may detect the second uplink channel or signal on one or more uplink resources in the second uplink resource set.

Illustratively, the third downlink cell is different from the first downlink cell.

It should be noted that the third downlink cell and the first downlink cell belong to the same cell group, or the third downlink cell and the first downlink cell belong to different cell groups.

It should be understood that the method for the terminal device to request the network device to send the third downlink channel or signal over the third downlink cell is similar to the method for the terminal device to request the network device to send the first downlink channel or signal over the first downlink cell, and details are not repeated here.

It should also be understood that the method for determining the type of the third downlink channel or signal is similar to the method for determining the type of the first downlink channel or signal, and details are not repeated here.

It should also be understood that the method for determining the type of the second uplink channel or signal is similar to the method for determining the type of the first uplink channel or signal, and details are not repeated here.

Through this method, in the case where the terminal device sends the second uplink channel or signal through one or more uplink resources in the second uplink resource set, since the subsequent network device needs to perform blind detection processing (such as detecting the second uplink channel or signal) on the uplink cell configured with the second uplink resource set, the uplink cell configured with the second uplink resource set can be turned on, while other uplink cells without service requirements are turned off, thereby saving power and avoiding resource waste.

In some embodiments, the method may further include: in a case where the network device detects the second uplink channel or signal on one or more uplink resources in the second uplink resource set, it may send the third downlink channel or signal over the third downlink cell.

Through this method, in the case where the third downlink cell is a timing reference cell, after the network device sends an SSB (i.e., the third downlink channel or signal) on the timing reference cell, the subsequent terminal device can update the TA value through the SSB, maintain uplink synchronization, and improve network communication performance. Alternatively, after the network device sends an SSB (i.e., the third downlink channel or signal) over the third downlink cell, the subsequent terminal device can perform measurement through the SSB sent by the network device to ensure that the selected beam direction can guarantee transmission robustness, improving network communication performance.

In some embodiments, the second uplink resource set is associated with the third downlink cell; and/or, the second uplink resource set is associated with a cell group to which the third downlink cell belongs.

Further, the association manner between the second uplink resource set and the third downlink cell may include one or more of the following two possible implementation manners.

A possible implementation manner, the second uplink resource set is associated with the third downlink cell.

Illustratively, the first configuration information may include an identifier of the third downlink cell; and/or, the first configuration information may be used to determine an association relationship between the second uplink resource set and the third downlink cell.

Through this method, in the case where the second uplink resource set is associated with the third downlink cell, since the subsequent network device needs to perform blind detection processing (such as detecting the second uplink channel or signal) on the uplink cell configured with the second uplink resource set, the uplink cell configured with the second uplink resource set can be turned on, while other uplink cells without service requirements are turned off, thereby saving power and avoiding resource waste.

Another possible implementation manner, the second uplink resource set is associated with the cell group to which the third downlink cell belongs.

Illustratively, the first configuration information may be used to determine the cell group to which the third downlink cell belongs.

For example, the first configuration information may include an identifier of the cell group to which the third downlink cell belongs; and/or, the first configuration information may be used to determine an association relationship between the second uplink resource set and each downlink cell in the cell group to which the third downlink cell belongs; and/or, the first configuration information may be used to determine an association relationship between the second uplink resource set and the third downlink cell in the cell group to which the third downlink cell belongs.

Through this method, in the case where the second uplink resource set is associated with the cell group to which the third downlink cell belongs, since the subsequent network device needs to perform blind detection processing (such as detecting the second uplink channel or signal) on the uplink cell configured with the second uplink resource set, the uplink cell configured with the second uplink resource set can be turned on, while other uplink cells without service requirements are turned off, thereby saving power and avoiding resource waste.

Based on the above two possible implementation manners, in some embodiments, the first configuration information may be used to determine one or more of: an identifier of the third downlink cell, a cell group to which the third downlink cell belongs, or an association relationship between the second uplink resource set and the third downlink cell.

Through this method, in the case where the first configuration information is used to determine one or more of the above information, the second uplink resource set can be associated with the third downlink cell. Since the subsequent network device needs to perform blind detection processing (such as detecting the second uplink channel or signal) on the uplink cell configured with the second uplink resource set, the uplink cell configured with the second uplink resource set can be turned on, while other uplink cells without service requirements are turned off, thereby saving power and avoiding resource waste.

In some embodiments, the QCL reference of the third downlink channel or signal may be determined based on the second downlink channel or signal; or
the QCL reference of the third downlink channel or signal may be determined based on a fourth downlink channel or signal on the third downlink cell.

That is, in some cases, the QCL reference of the first downlink channel or signal and the QCL reference of the third downlink channel or signal are both determined based on the second downlink channel or signal. In other cases, the QCL reference of the first downlink channel or signal is determined based on the second downlink channel or signal, and the QCL reference of the third downlink channel or signal is determined based on the fourth downlink channel or signal.

Illustratively, the third downlink cell is different from the second downlink cell.

Illustratively, the third downlink cell is different from the second downlink cell and the third downlink cell and the second downlink cell belong to the same cell group.

Illustratively, the third downlink cell and the second downlink cell belong to different cell groups.

Through this method, in the case where the QCL reference of the third downlink channel or signal is determined based on the second downlink channel or signal, or the QCL reference of the third downlink channel or signal is determined based on the fourth downlink channel or signal on the third downlink cell, it is possible to enable the subsequent network device to know the beam direction of the third downlink channel or signal when sending the third downlink channel or signal.

In some embodiments, the fourth downlink channel or signal may include an SSB on the third downlink cell; or the fourth downlink channel or signal may include a downlink reference signal on the third downlink cell configured by second TCI state configuration information.

Further, the first configuration information may include the second TCI state configuration information; or in the case where the second TCI state configuration information is not configured, the fourth downlink channel or signal may include an SSB on the third downlink cell.

Further, the first configuration information may be used to configure the SSB on the third downlink cell; or in the case where the SSB on the third downlink cell is not configured, the SSB on the third downlink cell may be determined based on system message of the third downlink cell.

It should be understood that the method for determining the QCL reference of the third downlink channel or signal is similar to the method for determining the QCL reference of the first downlink channel or signal, and details are not repeated here.

Illustratively, as shown in FIG. 3, the first configuration information may be used to configure the first uplink resource on the uplink active BWP of the first downlink cell. Assuming that the first uplink resource is an RO resource, the first configuration information may configure that one first period (i.e., one RO resource period) includes 6 RO resources, and the first configuration information may configure the set of PRACH sequences available on each RO resource. The first configuration information may also configure that the RO resource is used to request the network device to send SSBs over the first downlink cell and send SSBs over the third downlink cell. For example, the first configuration information may configure the identifier of the first downlink cell, the SSB set over the first downlink cell as SSB0~SSB3, the identifier of the third downlink cell, the SSB set on the third downlink cell as SSB0~SSB7, and one association period includes 2 first periods. Here, the index associated with the first downlink cell is smaller than the index associated with the third downlink cell.

Based on the above first configuration information, the terminal device can determine that within one association period, the first 4 RO resources are respectively associated with SSB0~SSB3 over the first downlink cell, and the last 8 RO resources are respectively associated with SSB0~SSB7 on the third downlink cell. If the terminal device needs to obtain the TA value or perform measurement through SSB2 on the third downlink cell, but the third downlink cell has not sent this SSB2 for some time, the terminal device may send one PRACH sequence from the configured PRACH sequence set through the RO resource associated with SSB2 (i.e., the first RO resource in the second RO resource period within one association period). After the network device detects the PRACH sequence from the PRACH sequence set through the RO resource associated with SSB2, it may send SSB2 through the third downlink cell.

The embodiments of the present disclosure provide a communication method. A terminal device can receive first configuration information, wherein the first configuration information is used to configure a first uplink resource, and the first uplink resource includes a first uplink resource set; send a first uplink channel or signal through a target uplink resource in the first uplink resource set, wherein the first uplink channel or signal is used to request sending a first downlink channel or signal over a first downlink cell. In this way, the terminal device sends the first uplink channel or signal through the target uplink resource in the first uplink resource set, which can enable the network device to learn that the terminal device needs to receive the first downlink channel or signal over the first downlink cell, thereby improving network communication performance.

Illustratively, in the case where the first downlink cell is a timing reference cell, the network device can configure a first uplink resource for the terminal device, the first uplink resource including a first uplink resource set, so that the terminal device can request, through the target uplink resource in the first uplink resource set, the network device to send an SSB (i.e., the first downlink channel or signal) on the timing reference cell, so that the subsequent terminal device can update the TA value through the SSB sent by the network device, maintain uplink synchronization, and improve network communication performance.

Illustratively, the network device can configure a first uplink resource for the terminal device, the first uplink resource including a first uplink resource set, so that the terminal device can request, through the target uplink resource in the first uplink resource set, the network device to send an SSB (i.e., the first downlink channel or signal) over the first downlink cell, so that the subsequent terminal device can perform measurement through the SSB sent by the network device to ensure that the selected beam direction can guarantee transmission robustness, improving network communication performance.

The communication method provided by the embodiments of the present disclosure is described below with examples in conjunction with specific application scenarios.

In the embodiments of the present disclosure, in order to enable the network device to learn the requirement that the terminal device needs to receive an SSB or other reference signals (such as CSI-RS, PRS, TRS) on a secondary cell, the network device may configure one or more uplink resources for the terminal device, so that the terminal device can request, through the one or more uplink resources, the network device to send the SSB or other reference signals on the secondary cell.

The network device may send first configuration information, wherein the first configuration information is used to configure a first uplink resource, the first uplink resource includes a first uplink resource set, a target uplink resource in the first uplink resource set is used to send a first uplink channel or signal, and the first uplink channel or signal is used to request the network device to send a first downlink channel or signal over a first downlink cell.

Correspondingly, the terminal device may receive the first configuration information, wherein the first configuration information is used to configure a first uplink resource, the first uplink resource includes a first uplink resource set, a target uplink resource in the first uplink resource set is used to send a first uplink channel or signal, and the first uplink channel or signal is used to request the network device to send a first downlink channel or signal over a first downlink cell.

The terminal device may send the first uplink channel or signal to the network device through the target uplink resource in the first uplink resource set.

After the network device detects the first uplink channel or signal on the target uplink resource in the first uplink resource set, the network device sends the first downlink channel or signal over the first downlink cell.

In some embodiments, the type of the first uplink channel or signal may include one or more of the following: PRACH, MsgA, PUCCH, or CG-PUSCH.

Further, the type of the first uplink channel or signal may be predefined or configured by the network device.

Here, MsgA may include PRACH and PUSCH.

Illustratively, MsgA may include PRACH and PUSCH in a two-step random access procedure.

In some embodiments, the type of the first downlink channel or signal may include one or more of: SSB, CSI-RS, TRS, PRS, or system message.

Here, CSI-RS may include one or more of the following: CSI-RS for CSI acquisition, or CSI-RS for BM.

Here, system messages may include one or more of the following: SIB1, or other system messages except ETWS/CMAS messages (SIB6, SIB7, SIB8), ETWS/CMAS messages (SIB6, SIB7, SIB8).

In some embodiments, when the first downlink channel or signal includes a system message, the first downlink channel or signal includes one or more of the following: a PDCCH for scheduling the system message, or a PDSCH carrying the system message.

Further, the type of the first downlink channel or signal may be predefined or configured by the network device.

In some embodiments, the first uplink resource set is associated with the first downlink cell. For example, the first configuration information includes an identifier of the first downlink cell, and/or, the first configuration information is used to determine an association relationship between the first uplink resource set and the first downlink cell.

In some embodiments, the first uplink resource set is associated with a cell group to which the first downlink cell belongs. For example, the first configuration information includes an identifier of the cell group to which the first downlink cell belongs; and/or, the first configuration information is used to determine an association relationship between the first uplink resource set and each downlink cell in the cell group to which the first downlink cell belongs; and/or, the first configuration information is used to determine an association relationship between the first uplink resource set and the first downlink cell in the cell group to which the first downlink cell belongs.

It should be noted that the first uplink resource set may include one or more uplink resources configured periodically, and the period corresponding to the first uplink resource set may be denoted as a first period. In the case where the first uplink resource set includes multiple uplink resources, any two uplink resources among the multiple uplink resources are different in one or more dimensions of time domain, frequency domain, and code domain.

In some embodiments, the QCL reference of the first downlink channel or signal is all candidate QCL references over the first downlink cell. For example, the first uplink channel or signal sent by the terminal device to the network device through the target uplink resource in the first uplink resource set is used to request first downlink channels or signals associated with all candidate QCL references.

In some embodiments, the QCL reference of the first downlink channel or signal may be determined based on a second downlink channel or signal, wherein the second downlink channel or signal is a downlink channel or signal on a second downlink cell.

Illustratively, the second downlink cell is the same as the first downlink cell.

Illustratively, the second downlink cell is different from the first downlink cell.

Illustratively, the second downlink cell is different from the first downlink cell and the second downlink cell and the first downlink cell belong to the same cell group.

Illustratively, the second downlink cell and the first downlink cell belong to different cell groups.

In some embodiments, the QCL reference of the first downlink channel or signal may be determined based on one or more of the following:
a first mapping relationship between an index associated with the first downlink channel or signal and one or more uplink resources in the first uplink resource set;
a second mapping relationship between an index associated with the second downlink channel or signal and one or more uplink resources in the first uplink resource set;
a third mapping relationship between an index associated with the first downlink channel or signal and an index associated with the second downlink channel or signal; or
the first configuration information.

Further, the index associated with the first downlink channel or signal is an index which is associated with the target uplink resource and determined based on the first mapping relationship; or
the QCL reference of the first downlink channel or signal is an index associated with the second downlink channel or signal which is associated with the target uplink resource and determined based on the second mapping relationship; or
the QCL reference of the first downlink channel or signal is an index which is associated with the second downlink channel or signal and determined based on the third mapping relationship; or
the QCL reference of the first downlink channel or signal is configured by the first configuration information.

It should be noted that the first downlink channel or signal and the second downlink channel or signal determined based on the third mapping relationship have a QCL relationship.

Illustratively, the QCL type corresponding to the QCL relationship between the first downlink channel or signal and the second downlink channel or signal is predefined. For example, it may be predefined that the QCL type corresponding to the QCL relationship between the first downlink channel or signal and the second downlink channel or signal is 'QCL-TypeA' and/or 'QCL-TypeD'.

Illustratively, the QCL type corresponding to the QCL relationship between the first downlink channel or signal and the second downlink channel or signal is configured by the network device. For example, the first configuration information is also used to configure the QCL type corresponding to the QCL relationship between the first downlink channel or signal and the second downlink channel or signal as 'QCL-TypeA' and/or 'QCL-TypeD'.

The technical solutions provided by the embodiments of the present disclosure are described in detail from three aspects below.
(I) The QCL reference of the first downlink channel or signal is an index associated with the second downlink channel or signal which is associated with the target uplink resource and determined based on the second mapping relationship.

In some embodiments, taking the QCL reference of the first downlink channel or signal being an index associated with the second downlink channel or signal which is associated with the target uplink resource and determined based on the second mapping relationship as an example, the determination manner of the QCL reference of the first downlink channel or signal is described in detail through the following four examples.

Example 1: In the case where the second downlink cell is the same as the first downlink cell and the second downlink channel or signal includes an SSB over the first downlink cell, the QCL reference of the first downlink channel or signal is: an index associated with the SSB over the first downlink cell associated with the target uplink resource determined based on the second mapping relationship.

That is, the terminal device may determine the QCL reference of the first downlink channel or signal according to the index associated with the SSB over the first downlink cell associated with the target uplink resource determined based on the second mapping relationship.

Illustratively, it is assumed that the SSBs over the first downlink cell include SSB 0 and SSB 1, and the first uplink resource set includes uplink resource 0 and uplink resource 1. Based on the second mapping relationship, it can be determined that SSB 0 over the first downlink cell is associated with uplink resource 0, and SSB 1 is associated with uplink resource 1. If the terminal device wants to request the network device to send, over the first downlink cell, a first downlink channel or signal that has a QCL relationship with SSB 1 over the first downlink cell, it may select uplink resource 1 as the target uplink resource to send the first uplink channel or signal. Correspondingly, if the network device receives the first uplink channel or signal through uplink resource 1, the network device may send, over the first downlink cell, a first downlink channel or signal that has a QCL relationship with SSB 1 over the first downlink cell.

In some embodiments, the first configuration information is also used to configure the SSB over the first downlink cell.

In other embodiments, in the case where the SSB over the first downlink cell is not configured, the terminal device may determine the SSB over the first downlink cell based on system message of the first downlink cell.

Example 2: In the case where the second downlink cell is different from the first downlink cell and the second downlink channel or signal includes an SSB on the second downlink cell, the QCL reference of the first downlink channel or signal is: an index associated with the SSB on the second downlink cell associated with the target uplink resource determined based on the second mapping relationship.

That is, the terminal device may determine the QCL reference of the first downlink channel or signal according to the index associated with the SSB on the second downlink cell associated with the target uplink resource determined based on the second mapping relationship.

Illustratively, it is assumed that the SSBs on the second downlink cell include SSB 0 and SSB 1, and the first uplink resource set includes uplink resource 0 and uplink resource 1. Based on the second mapping relationship, it can be determined that SSB 0 on the second downlink cell is associated with uplink resource 0, and SSB 1 is associated with uplink resource 1. If the terminal device wants to request the network device to send, over the first downlink cell, a first downlink channel or signal that has a QCL relationship with SSB 1 on the second downlink cell, it may select uplink resource 1 as the target uplink resource to send the first uplink channel or signal. Correspondingly, if the network device receives the first uplink channel or signal through uplink resource 1, the network device may send, over the first downlink cell, a first downlink channel or signal that has a QCL relationship with SSB 1 on the second downlink cell.

In some embodiments, the first downlink cell and the second downlink cell belong to the same TAG.

In some embodiments, the first downlink cell is a secondary cell of the terminal device, and the second downlink cell is a primary cell of the terminal device.

In some embodiments, the first configuration information is also used to configure the SSB on the second downlink cell.

In other embodiments, in the case where the SSB on the second downlink cell is not configured, the terminal device may determine the SSB on the second downlink cell based on system message of the second downlink cell.

In some embodiments, the first configuration information includes an identifier of the second downlink cell; or the first configuration information is used to determine an association relationship between the first downlink cell and the second downlink cell.

Example 3: In the case where the second downlink cell is the same as the first downlink cell and the second downlink channel or signal includes a downlink reference signal over the first downlink cell configured by first TCI state configuration information, the QCL reference of the first downlink channel or signal is: an index associated with the first TCI state configuration information associated with the target uplink resource determined based on the second mapping relationship.

That is, the terminal device may determine the QCL reference of the first downlink channel or signal according to the index associated with the first TCI state configuration information associated with the target uplink resource determined based on the second mapping relationship.

Illustratively, the second downlink channel or signal is an SSB or a CSI-RS.

Illustratively, it is assumed that the first TCI state configuration information includes TCI state 0 and TCI state 1, and the first uplink resource set includes uplink resource 0 and uplink resource 1. Based on the second mapping relationship, it can be determined that TCI state 0 configured by the first TCI state configuration information is associated with uplink resource 0, and TCI state 1 is associated with uplink resource 1. If the terminal device wants to request the network device to send, over the first downlink cell, a first downlink channel or signal that has a QCL relationship with TCI state 1 configured by the first TCI state configuration information, it may select uplink resource 1 as the target uplink resource to send the first uplink channel or signal. Correspondingly, if the network device receives the first uplink channel or signal through uplink resource 1, the network device may send, over the first downlink cell, a first downlink channel or signal that has a QCL relationship with TCI state 1.

In some embodiments, the first configuration information may include the first TCI state configuration information. For example, the first configuration information may include one or more first TCI state identifiers; or the first configuration information may include one or more first TCI states.

In other embodiments, in the case where the first TCI state configuration information is not configured, the terminal device may determine that the second downlink channel or signal is an SSB over the first downlink cell.

Example 4: In the case where the second downlink cell is different from the first downlink cell and the second downlink channel or signal includes a downlink reference signal on the second downlink cell configured by first TCI state configuration information, the QCL reference of the first downlink channel or signal is: an index associated with the first TCI state configuration information associated with the target uplink resource determined based on the second mapping relationship.

That is, the terminal device may determine the QCL reference of the first downlink channel or signal according to the index associated with the first TCI state configuration information associated with the target uplink resource determined based on the second mapping relationship.

Illustratively, the second downlink channel or signal is an SSB or a CSI-RS.

Illustratively, it is assumed that the first TCI state configuration information includes TCI state 0 and TCI state 1, and the first uplink resource set includes uplink resource 0 and uplink resource 1. Based on the second mapping relationship, it can be determined that TCI state 0 configured by the first TCI state configuration information is associated with uplink resource 0, and TCI state 1 is associated with uplink resource 1. If the terminal device wants to request the network device to send, over the first downlink cell, a first downlink channel or signal that has a QCL relationship with TCI state 1 configured by the first TCI state configuration information, it may select uplink resource 1 as the target uplink resource to send the first uplink channel or signal. Correspondingly, if the network device receives the first uplink channel or signal through uplink resource 1, the network device may send, over the first downlink cell, a first downlink channel or signal that has a QCL relationship with TCI state 1.

In some embodiments, the first downlink cell and the second downlink cell belong to the same TAG.

In some embodiments, the first downlink cell is a secondary cell of the terminal device, and the second downlink cell is a primary cell of the terminal device.

In some embodiments, the first configuration information may include the first TCI state configuration information. For example, the first configuration information may include one or more first TCI state identifiers; or the first configuration information may include one or more first TCI states.

In other embodiments, in the case where the first TCI state configuration information is not configured, the terminal device may determine that the second downlink channel or signal is an SSB over the first downlink cell; or the terminal device may determine that the second downlink channel or signal is an SSB on the second downlink cell.

In some embodiments, the first configuration information includes an identifier of the second downlink cell; or the first configuration information is used to determine an association relationship between the first downlink cell and the second downlink cell.

(II) The mapping relationship between the index associated with the second downlink channel or signal and the one or more uplink resources in the first uplink resource set.

In some embodiments, the mapping relationship between the index associated with the second downlink channel or signal and the one or more uplink resources in the first uplink resource set may include: a mapping relationship between the index associated with the second downlink channel or signal and the one or more uplink resources in the first uplink resource set within one association period.

In some embodiments, the length of the one association period is configured by the network device or predefined.

In some embodiments, the one association period includes an integer number of first periods, and the first period is the period of the first uplink resource set.

Illustratively, the second downlink channel or signal may include one or more SSBs. Within one association period, starting from SFN 0, the indexes associated with the one or more SSBs are sequentially mapped to the one or more uplink resources in the first uplink resource set in ascending order of indexes; wherein the indexes associated with the one or more SSBs are mapped to valid uplink resources in the first uplink resource set.

Illustratively, the second downlink channel or signal may include one or more SSBs. Within one association period, starting from SFN 0, the indexes associated with the one or more SSBs are sequentially mapped to the one or more uplink resources in the first uplink resource set in ascending order of indexes; wherein the indexes associated with the one or more SSBs are mapped to configured uplink resources in the first uplink resource set.

Illustratively, the second downlink channel or signal may include one or more downlink reference signals on the second downlink cell configured by the first TCI state configuration information. Within one association period, starting from SFN 0, the indexes associated with the one or more first TCI state configuration information are sequentially mapped to the one or more uplink resources in the first uplink resource set in ascending order of indexes; wherein the indexes associated with the one or more first TCI state configuration information are mapped to valid uplink resources in the first uplink resource set.

Illustratively, the second downlink channel or signal may include one or more downlink reference signals on the second downlink cell configured by the first TCI state configuration information. Within one association period, starting from SFN 0, the indexes associated with the one or more first TCI state configuration information are sequentially mapped to the one or more uplink resources in the first uplink resource set in ascending order of indexes; wherein the indexes associated with the one or more first TCI state configuration information are mapped to configured uplink resources in the first uplink resource set.

In some embodiments, the second downlink channel or signal may include one or more SSBs, and the mapping relationship between the index associated with the one or more SSBs and the one or more uplink resources in the first uplink resource set may be predefined or configured by the network device. For example, the mapping relationship between the index associated with the one or more SSBs and the one or more uplink resources in the first uplink resource set may be one-to-one, or one-to-many, or many-to-one.

In some embodiments, the second downlink channel or signal may include one or more downlink reference signals on the second downlink cell configured by the first TCI state configuration information, and the mapping relationship between the index associated with the one or more first TCI state configuration information and the one or more uplink resources in the first uplink resource set may be predefined or configured by the network device. For example, the mapping relationship between the index associated with the one or more first TCI state configuration information and the one or more uplink resources in the first uplink resource set may be one-to-one, or one-to-many, or many-to-one.

In some embodiments, in the case where it is determined that one SSB-associated index or one first TCI state configuration information-associated index is mapped to multiple uplink resources in the first uplink resource set, the multiple uplink resources are used for repeated transmission of the first uplink channel or signal.

In some embodiments, the sorting of the one or more uplink resources in the first uplink resource set is: if there are multiple code domain resources on one uplink transmission occasion, sort in ascending order of indexes in the code domain; if there are multiple uplink transmission occasions in the frequency domain at the same time domain position, sort in ascending order of indexes in the frequency domain; if there are multiple uplink transmission occasions in the time domain within one first period, sort in ascending order of indexes in the time domain; if there are multiple first periods within one association period, sort in ascending order of indexes of the first periods.

Illustratively, it is assumed that the first uplink resource set includes one or more PRACH resources. The sorting of the one or more PRACH resources is: on one RO (PRACH transmission occasion), sort in ascending order of PRACH sequence indexes; if there are multiple ROs in the frequency domain at the same time domain position, sort in ascending order of indexes in the frequency domain; if there are multiple ROs in the time domain within the PRACH resource configuration period (i.e., the first period), sort in ascending order of indexes in the time domain; if there are multiple PRACH resource configuration periods within one association period, sort in ascending order of indexes of the PRACH resource configuration periods.

Illustratively, the first uplink resource set includes one or more PUCCH resources. The sorting of the one or more PUCCH resources is: on one PUCCH transmission occasion, sort in ascending order of PUCCH sequence indexes; if there are multiple PUCCH transmission occasions in the frequency domain at the same time domain position, sort in ascending order of indexes in the frequency domain; if there are multiple PUCCH transmission occasions in the time domain within the PUCCH resource configuration period (i.e., the first period), sort in ascending order of indexes in the time domain; if there are multiple PUCCH resource configuration periods within one association period, sort in ascending order of indexes of the PUCCH resource configuration periods.

Illustratively, the first uplink resource set includes one or more PUSCH resources. The sorting of the one or more PUSCH resources is: on one PUSCH transmission occasion, sort in ascending order of DMRS resource indexes, where, when sorting in ascending order of DMRS resource indexes, in the case of the same DMRS sequence index, sort in ascending order of DMRS antenna port numbers; sort in ascending order of DMRS sequence indexes; within the PUSCH resource configuration period (i.e., the first period), sort in ascending order of indexes in the time domain; if there are multiple PUSCH resource configuration periods within one association period, sort in ascending order of indexes of the PUSCH resource configuration periods.

(III) The first configuration information is used to configure uplink resources for requesting multiple downlink cells to send downlink channels or signals.

In some embodiments, the first configuration information is also used to configure a second uplink resource, and the second uplink resource may include a second uplink resource set; one or more uplink resources in the second uplink resource set are used to send a second uplink channel or signal, and the second uplink channel or signal is used to request the network device to send a third downlink channel or signal over a third downlink cell.

In other embodiments, the first uplink resource may further include a second uplink resource set; one or more uplink resources in the second uplink resource set are used to send a second uplink channel or signal, and the second uplink channel or signal is used to request the network device to send a third downlink channel or signal over a third downlink cell.

It should be understood that the method for the terminal device to request the network device to send the third downlink channel or signal over the third downlink cell is similar to the method for the terminal device to request the network device to send the first downlink channel or signal over the first downlink cell, and details are not repeated here.

It should also be understood that the method for determining the type of the third downlink channel or signal is similar to the method for determining the type of the first downlink channel or signal, and details are not repeated here.

It should also be understood that the method for determining the type of the second uplink channel or signal is similar to the method for determining the type of the first uplink channel or signal, and details are not repeated here.

In some embodiments, the second uplink resource set is associated with the third downlink cell. For example, the first configuration information may include an identifier of the third downlink cell, and/or, the first configuration information may be used to determine an association relationship between the second uplink resource set and the third downlink cell.

In some embodiments, the second uplink resource set is associated with a cell group to which the third downlink cell belongs. For example, the first configuration information may include an identifier of the cell group to which the third downlink cell belongs; and/or, the first configuration information may be used to determine an association relationship between the second uplink resource set and each downlink cell in the cell group to which the third downlink cell belongs; and/or, the first configuration information may be used to determine an association relationship between the second uplink resource set and the third downlink cell in the cell group to which the third downlink cell belongs.

In some embodiments, the QCL reference of the third downlink channel or signal may be determined based on the second downlink channel or signal; or
the QCL reference of the third downlink channel or signal may be determined based on a fourth downlink channel or signal on the third downlink cell.

That is, in some cases, the QCL reference of the first downlink channel or signal and the QCL reference of the third downlink channel or signal are both determined based on the second downlink channel or signal. In other cases, the QCL reference of the first downlink channel or signal is determined based on the second downlink channel or signal, and the QCL reference of the third downlink channel or signal is determined based on the fourth downlink channel or signal.

Illustratively, the third downlink cell is different from the second downlink cell.

Illustratively, the third downlink cell is different from the second downlink cell and the third downlink cell and the second downlink cell belong to the same cell group.

Illustratively, the third downlink cell and the second downlink cell belong to different cell groups.

Further, the fourth downlink channel or signal may include an SSB on the third downlink cell; or the fourth downlink channel or signal may include a downlink reference signal on the third downlink cell configured by second TCI state configuration information.

In some embodiments, the first configuration information may be used to configure uplink resources for requesting multiple downlink cells to send downlink channels or signals.

It should be noted that the mapping order of the QCL references of the downlink channels or signals on the multiple downlink cells is: sorted in ascending order of cell indexes.

In some embodiments, the first uplink resource may be an uplink resource configured on an uplink cell.

Here, the uplink cell may be a secondary cell of the terminal device; or the uplink cell may be a primary cell of the terminal device.

In the embodiments of the present disclosure, for a network energy saving system, on a secondary carrier of the terminal device, the network device may not send SSBs, but configures uplink resources for the secondary carrier for requesting the network device to send SSBs. When the secondary carrier is a timing reference cell for the terminal device to obtain a TA value, the terminal device can request, through the configured uplink resources, the network device to send SSBs on the secondary carrier, so that the terminal device can update the TA value through the SSBs sent by the network device, maintain uplink synchronization, and improve network communication performance. Alternatively, on a downlink serving cell of the terminal device, the network device may not send SSBs, but uplink resources are configured on an uplink serving cell for requesting the network device to send SSBs for the downlink serving cell. When the terminal device has a need for measurement, such as beam measurement, the terminal device can request, through the uplink resources, the network device to send SSBs (i.e., the first downlink channel or signal) on the downlink serving cell, so that the subsequent terminal device can perform measurement through the SSBs sent by the network device, thereby improving network communication performance.

The preferred embodiments of the present disclosure have been described in detail above with reference to the accompanying drawings. However, the present disclosure is not limited to the specific details of the above embodiments. Within the scope of the technical concept of the present disclosure, various simple modifications can be made to the technical solutions of the present disclosure, and these simple modifications all fall within the protection scope of the present disclosure. For example, the various specific technical features described in the above specific embodiments can be combined in any suitable manner if there is no contradiction. To avoid unnecessary repetition, various possible combinations are not described separately in the present disclosure. For another example, various different embodiments of the present disclosure can also be arbitrarily combined, as long as they do not violate the idea of the present disclosure, and they should also be regarded as the content disclosed in the present disclosure. For another example, on the premise of no conflict, the various embodiments described in the present disclosure and/or the technical features in the various embodiments can be arbitrarily combined with the prior art, and the technical solutions obtained after combination shall also fall within the protection scope of the present disclosure.

It should also be understood that in various method embodiments of the present disclosure, the magnitude of the sequence numbers of the above processes does not imply the order of execution, and the order of execution of the processes should be determined by their functions and internal logic, and should not constitute any limitation on the implementation process of the embodiments of the present disclosure.

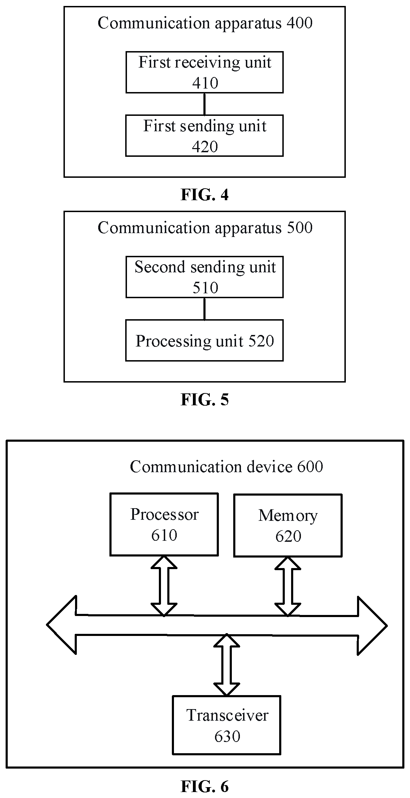

FIG. 4 is a schematic structural composition diagram of a communication apparatus 400 provided by an embodiment of the present disclosure, applied to a terminal device. As shown in FIG. 4, the communication apparatus 400 may include:
a first receiving unit 410, configured to receive first configuration information, wherein the first configuration information is used to configure a first uplink resource, and the first uplink resource includes a first uplink resource set;
a first sending unit 420, configured to send a first uplink channel or signal through a target uplink resource in the first uplink resource set, wherein the first uplink channel or signal is used to request sending a first downlink channel or signal over a first downlink cell.

In some embodiments, a quasi co-location QCL reference of the first downlink channel or signal is determined based on a second downlink channel or signal, wherein the second downlink channel or signal is a downlink channel or signal on a second downlink cell; wherein the second downlink cell is the same as the first downlink cell; or the second downlink cell and the first downlink cell belong to the same cell group; or the second downlink cell is different from the first downlink cell.

In some embodiments, the second downlink channel or signal includes a synchronization signal block SSB on the second downlink cell; or the second downlink channel or signal includes a downlink reference signal on the second downlink cell configured by first transmission configuration indication TCI state configuration information.

In some embodiments, the downlink reference signal on the second downlink cell configured by the first TCI state configuration information includes an SSB or a channel state information reference signal CSI-RS.

In some embodiments, the first configuration information includes the first TCI state configuration information; or in a case where the first TCI state configuration information is not configured, the second downlink channel or signal includes an SSB on the second downlink cell.

In some embodiments, the first configuration information is used to configure the SSB on the second downlink cell; or in a case where the SSB on the second downlink cell is not configured, the SSB on the second downlink cell is determined based on system message of the second downlink cell.

In some embodiments, the QCL reference of the first downlink channel or signal is determined based on one or more of the following:
a first mapping relationship between an index associated with the first downlink channel or signal and one or more uplink resources in the first uplink resource set;
a second mapping relationship between an index associated with the second downlink channel or signal and one or more uplink resources in the first uplink resource set;
a third mapping relationship between an index associated with the first downlink channel or signal and an index associated with the second downlink channel or signal; or
the first configuration information.

In some embodiments, indexes associated with the first downlink channel or signal are sorted in ascending order of indexes.

In some embodiments, indexes associated with the second downlink channel or signal are sorted in ascending order of indexes.

In some embodiments, the sorting of the one or more uplink resources in the first uplink resource set includes one or more of the following:
sorting in ascending order of indexes in the code domain;
sorting in ascending order of indexes in the frequency domain;
sorting in ascending order of indexes in the time domain; or
sorting in ascending order of indexes of a period.

In some embodiments, the index associated with the first downlink channel or signal is an index which is associated with the target uplink resource and determined based on the first mapping relationship; or
the QCL reference of the first downlink channel or signal is an index associated with the second downlink channel or signal which is associated with the target uplink resource and determined based on the second mapping relationship; or
the QCL reference of the first downlink channel or signal is an index which is associated with the second downlink channel or signal and determined based on the third mapping relationship; or
the QCL reference of the first downlink channel or signal is configured by the first configuration information.

In some embodiments, the second downlink cell is a primary cell.

In some embodiments, in a case where the second downlink cell is different from the first downlink cell, the first configuration information is used to determine one or more of: an identifier of the second downlink cell, a cell group to which the second downlink cell belongs, or an association relationship between the first downlink cell and the second downlink cell.

In some embodiments, the first configuration information is further used to configure a second uplink resource, the second uplink resource including a second uplink resource set; the first sending unit 420 is further configured to send a second uplink channel or signal through one or more uplink resources in the second uplink resource set, wherein the second uplink channel or signal is used to request sending a third downlink channel or signal over a third downlink cell; wherein the third downlink cell is different from the first downlink cell.

In some embodiments, the first uplink resource further includes a second uplink resource set; the first sending unit 420 is further configured to send a second uplink channel or signal through one or more uplink resources in the second uplink resource set, wherein the second uplink channel or signal is used to request sending a third downlink channel or signal over a third downlink cell; wherein the third downlink cell is different from the first downlink cell.

In some embodiments, the third downlink cell and the first downlink cell belong to the same cell group, or the third downlink cell and the first downlink cell belong to different cell groups.

In some embodiments, the QCL reference of the third downlink channel or signal is determined based on the second downlink channel or signal; or the QCL reference of the third downlink channel or signal is determined based on a fourth downlink channel or signal on the third downlink cell; wherein the third downlink cell is different from the second downlink cell, and the third downlink cell and the second downlink cell belong to the same cell group.

In some embodiments, the fourth downlink channel or signal includes an SSB on the third downlink cell; or the fourth downlink channel or signal includes a downlink reference signal on the third downlink cell configured by second TCI state configuration information.

In some embodiments, the first configuration information is used to determine one or more of: an identifier of the third downlink cell, a cell group to which the third downlink cell belongs, or an association relationship between the second uplink resource set and the third downlink cell.

In some embodiments, the first configuration information is used to determine one or more of: an identifier of the first downlink cell, a cell group to which the first downlink cell belongs, or an association relationship between the first uplink resource set and the first downlink cell.

In some embodiments, in a case where the target uplink resource includes multiple uplink resources, the multiple uplink resources in the target uplink resource are used to repeatedly send the first uplink channel or signal.

In some embodiments, the first downlink channel or signal includes one or more of: SSB, CSI-RS, tracking reference signal TRS, positioning reference signal PRS, or system message.

In some embodiments, the first uplink channel or signal includes one or more of the following: physical random access channel PRACH, message A MsgA, physical uplink control channel PUCCH, or configured grant physical uplink shared channel CG-PUSCH.

In some embodiments, the first uplink resource is an uplink resource configured on an uplink cell; wherein the uplink cell is a primary cell; or the uplink cell is a secondary cell.

The embodiments of the present disclosure provide a communication apparatus. A terminal device can receive first configuration information, wherein the first configuration information is used to configure a first uplink resource, and the first uplink resource includes a first uplink resource set; send a first uplink channel or signal through a target uplink resource in the first uplink resource set, wherein the first uplink channel or signal is used to request sending a first downlink channel or signal over a first downlink cell. In this way, the terminal device sends the first uplink channel or signal through the target uplink resource in the first uplink resource set, which can enable the network device to learn that the terminal device needs to receive the first downlink channel or signal over the first downlink cell, thereby improving network communication performance.

Those skilled in the art should understand that the relevant description of the above communication apparatus in the embodiments of the present disclosure can be understood with reference to the relevant description of the communication method in the embodiments of the present disclosure.

FIG. 5 is a schematic structural composition diagram of a communication apparatus 500 provided by an embodiment of the present disclosure, applied to a network device. As shown in FIG. 5, the communication apparatus 500 may include a second sending unit 510 and a processing unit 520.

The second sending unit 510 is configured to send first configuration information, wherein the first configuration information is used to configure a first uplink resource, and the first uplink resource includes a first uplink resource set.

The processing unit 520 is configured to detect a first uplink channel or signal on one or more uplink resources in the first uplink resource set, wherein the first uplink channel or signal is used to request sending a first downlink channel or signal over a first downlink cell.

In some embodiments, the second sending unit 510 is configured to, in a case where the first uplink channel or signal is detected on a target uplink resource in the first uplink resource set, send the first downlink channel or signal over the first downlink cell.

In some embodiments, a quasi co-location QCL reference of the first downlink channel or signal is determined based on a second downlink channel or signal, wherein the second downlink channel or signal is a downlink channel or signal on a second downlink cell; wherein the second downlink cell is the same as the first downlink cell; or the second downlink cell and the first downlink cell belong to the same cell group; or the second downlink cell is different from the first downlink cell.

In some embodiments, the second downlink channel or signal includes a synchronization signal block SSB on the second downlink cell; or the second downlink channel or signal includes a downlink reference signal on the second downlink cell configured by first transmission configuration indication TCI state configuration information.

In some embodiments, the downlink reference signal on the second downlink cell configured by the first TCI state configuration information includes an SSB or a channel state information reference signal CSI-RS.

In some embodiments, the first configuration information includes the first TCI state configuration information; or in a case where the first TCI state configuration information is not configured, the second downlink channel or signal includes an SSB on the second downlink cell.

In some embodiments, the first configuration information is used to configure the SSB on the second downlink cell; or in a case where the SSB on the second downlink cell is not configured, the SSB on the second downlink cell is determined based on system message of the second downlink cell.

In some embodiments, the QCL reference of the first downlink channel or signal is determined based on one or more of the following:
a first mapping relationship between an index associated with the first downlink channel or signal and one or more uplink resources in the first uplink resource set;
a second mapping relationship between an index associated with the second downlink channel or signal and one or more uplink resources in the first uplink resource set;
a third mapping relationship between an index associated with the first downlink channel or signal and an index associated with the second downlink channel or signal; or
the first configuration information.

In some embodiments, indexes associated with the first downlink channel or signal are sorted in ascending order of indexes.

In some embodiments, indexes associated with the second downlink channel or signal are sorted in ascending order of indexes.

In some embodiments, the sorting of the one or more uplink resources in the first uplink resource set includes one or more of the following:
sorting in ascending order of indexes in the code domain;
sorting in ascending order of indexes in the frequency domain;
sorting in ascending order of indexes in the time domain; or
sorting in ascending order of indexes of a period.

In some embodiments, the index associated with the first downlink channel or signal is an index which is associated with the target uplink resource and determined based on the first mapping relationship; or
the QCL reference of the first downlink channel or signal is an index associated with the second downlink channel or signal which is associated with the target uplink resource and determined based on the second mapping relationship; or
the QCL reference of the first downlink channel or signal is an index which is associated with the second downlink channel or signal and determined based on the third mapping relationship; or
the QCL reference of the first downlink channel or signal is configured by the first configuration information.

In some embodiments, the second downlink cell is a primary cell.

In some embodiments, in a case where the second downlink cell is different from the first downlink cell, the first configuration information is used to determine one or more of: an identifier of the second downlink cell, a cell group to which the second downlink cell belongs, or an association relationship between the first downlink cell and the second downlink cell.

In some embodiments, the first configuration information is further used to configure a second uplink resource, the second uplink resource including a second uplink resource set; the processing unit 520 is further configured to detect a second uplink channel or signal on one or more uplink resources in the second uplink resource set, wherein the second uplink channel or signal is used to request sending a third downlink channel or signal over a third downlink cell; wherein the third downlink cell is different from the first downlink cell.

In some embodiments, the first uplink resource further includes a second uplink resource set; the processing unit 520 is further configured to detect a second uplink channel or signal on one or more uplink resources in the second uplink resource set, wherein the second uplink channel or signal is used to request sending a third downlink channel or signal over a third downlink cell; wherein the third downlink cell is different from the first downlink cell.

In some embodiments, the second sending unit 510 is further configured to, in a case where the second uplink channel or signal is detected on one or more uplink resources in the second uplink resource set, send the third downlink channel or signal over the third downlink cell.

In some embodiments, the third downlink cell and the first downlink cell belong to the same cell group, or the third downlink cell and the first downlink cell belong to different cell groups.

In some embodiments, the QCL reference of the third downlink channel or signal is determined based on the second downlink channel or signal; or the QCL reference of the third downlink channel or signal is determined based on a fourth downlink channel or signal on the third downlink cell; wherein the third downlink cell is different from the second downlink cell, and the third downlink cell and the second downlink cell belong to the same cell group.

In some embodiments, the fourth downlink channel or signal includes an SSB on the third downlink cell; or the fourth downlink channel or signal includes a downlink reference signal on the third downlink cell configured by second TCI state configuration information.

In some embodiments, the first configuration information is used to determine one or more of: an identifier of the third downlink cell, a cell group to which the third downlink cell belongs, or an association relationship between the second uplink resource set and the third downlink cell.

In some embodiments, the first configuration information is used to determine one or more of: an identifier of the first downlink cell, a cell group to which the first downlink cell belongs, or an association relationship between the first uplink resource set and the first downlink cell.

In some embodiments, the first downlink channel or signal includes one or more of SSB, CSI-RS, tracking reference signal TRS, positioning reference signal PRS, or system message.

In some embodiments, the first uplink channel or signal includes one or more of the following: physical random access channel PRACH, message A MsgA, physical uplink control channel PUCCH, or configured grant physical uplink shared channel CG-PUSCH.

In some embodiments, the first uplink resource is an uplink resource configured on an uplink cell; wherein the uplink cell is a primary cell; or the uplink cell is a secondary cell.

The embodiments of the present disclosure provide a communication apparatus. A network device can be configured to send first configuration information, wherein the first configuration information is used to configure a first uplink resource, and the first uplink resource includes a first uplink resource set; detect a first uplink channel or signal on one or more uplink resources in the first uplink resource set, wherein the first uplink channel or signal is used to request sending a first downlink channel or signal over a first downlink cell. In this way, by detecting the first uplink channel or signal on one or more uplink resources in the first uplink resource set, the network device can learn that the terminal device needs to receive the first downlink channel or signal over the first downlink cell, thereby improving network communication performance.

Those skilled in the art should understand that the relevant description of the above communication apparatus in the embodiments of the present disclosure can be understood with reference to the relevant description of the communication method in the embodiments of the present disclosure.

FIG. 6 is a schematic structural diagram of a communication device provided by an embodiment of the present disclosure. The communication device 600 may be a terminal device or a network device. The communication device 600 shown in FIG. 6 may include a processor 610 and a memory 620, wherein:
the memory 620 may be used to store computer-executable instructions;
the processor 610, connected to the memory 620, is used to implement the methods in the embodiments of the present disclosure by executing the computer-executable instructions.

The memory 620 may be a separate device independent of the processor 610, or may be integrated into the processor 610.

In some embodiments, as shown in FIG. 6, the communication device 600 may further include a transceiver 630, and the processor 610 may control the transceiver 630 to communicate with other devices, specifically, may send information or data to other devices, or receive information or data sent by other devices.

Here, the transceiver 630 may include a transmitter and a receiver. The transceiver 630 may further include antennas, and the number of antennas may be one or more.

In some embodiments, the communication device 600 may be a terminal device in the embodiments of the present disclosure, and the communication device 600 may implement the corresponding processes implemented by the terminal device in the various methods of the embodiments of the present disclosure, which are not repeated here for brevity.

In some embodiments, the communication device 600 may be a network device in the embodiments of the present disclosure, and the communication device 600 may implement the corresponding processes implemented by the network device in the various methods of the embodiments of the present disclosure, which are not repeated here for brevity.

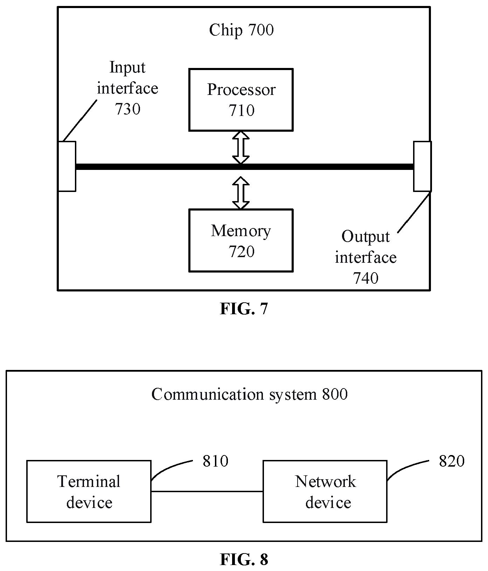

FIG. 7 is a schematic structural diagram of a chip provided by an embodiment of the present disclosure. The chip 700 shown in FIG. 7 includes a processor 710 and a memory 720, wherein:
the processor 710 may call and run a computer program from the memory 720, so that a device on which the chip is installed executes the methods in the embodiments of the present disclosure.

Here, the memory 720 may be a separate device independent of the processor 710, or may be integrated into the processor 710.

In some embodiments, the chip 700 may further include an input interface 730. Here, the processor 710 may control the input interface 730 to communicate with other devices or chips, specifically, may obtain information or data sent by other devices or chips.

In some embodiments, the chip 700 may further include an output interface 740. Here, the processor 710 may control the output interface 740 to communicate with other devices or chips, specifically, may output information or data to other devices or chips.

In some embodiments, the chip may be applied to the terminal device in the embodiments of the present disclosure, and the chip may implement the corresponding processes implemented by the terminal device in the various methods of the embodiments of the present disclosure, which are not repeated here for brevity.

In some embodiments, the chip may be applied to the network device in the embodiments of the present disclosure, and the chip may implement the corresponding processes implemented by the network device in the various methods of the embodiments of the present disclosure, which are not repeated here for brevity.

It should be understood that the chip mentioned in the embodiments of the present disclosure may also be referred to as a system-on-chip, a system on chip, a chip system, or a system-on-chip chip, etc.

FIG. 8 is a schematic block diagram of a communication system provided by an embodiment of the present disclosure. As shown in FIG. 8, the communication system 800 includes a terminal device 810 and a network device 820.

Here, the terminal device 810 may be used to implement the corresponding functions implemented by the terminal device in the above methods, and the network device 820 may be used to implement the corresponding functions implemented by the network device in the above methods, which are not repeated here for brevity.

It should be understood that the processor of the embodiments of the present disclosure may be an integrated circuit chip having signal processing capability. In the implementation process, each step of the above method embodiments may be completed by an integrated logic circuit of hardware in the processor or instructions in the form of software. The above processor may be a general-purpose processor, a digital signal processor (DSP), an application specific integrated circuit (ASIC), a field programmable gate array (FPGA) or other programmable logic devices, discrete gate or transistor logic devices, or discrete hardware components. It may implement or execute the methods, steps, and logic block diagrams disclosed in the embodiments of the present disclosure. The general-purpose processor may be a microprocessor or the processor may also be any conventional processor, etc. The steps of the methods disclosed in the embodiments of the present disclosure may be directly embodied as being executed and completed by a hardware decoding processor, or executed and completed by a combination of hardware and software modules in the decoding processor. The software module may be located in a storage medium mature in the art such as random access memory, flash memory, read-only memory, programmable read-only memory, or electrically erasable programmable memory, registers, etc. The storage medium is located in the memory, and the processor reads information from the memory and completes the steps of the above methods in combination with its hardware.

It can be understood that the memory in the embodiments of the present disclosure may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. By way of exemplary but not restrictive description, many forms of RAM are available, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), and direct rambus RAM (DR RAM). It should be noted that the memory of the systems and methods described herein is intended to include, but is not limited to, these and any other suitable types of memory.

It should be understood that the above memory is exemplary but not restrictive. For example, the memory in the embodiments of the present disclosure may also be static RAM (SRAM), dynamic RAM (DRAM), synchronous DRAM (SDRAM), double data rate SDRAM (DDR SDRAM), enhanced SDRAM (ESDRAM), synch link DRAM (SLDRAM), and direct Rambus RAM (DR RAM), etc. That is, the memory in the embodiments of the present disclosure is intended to include, but is not limited to, these and any other suitable types of memory.

An embodiment of the present disclosure also provides a computer-readable storage medium, the computer-readable storage medium stores a computer program, and when the computer program is executed by at least one processor, it implements the methods in the embodiments of the present disclosure.

In some embodiments, the computer-readable storage medium may be applied to the terminal device in the embodiments of the present disclosure, and the computer program causes a computer to execute the corresponding processes implemented by the terminal device in the various methods of the embodiments of the present disclosure, which are not repeated here for brevity.

In some embodiments, the computer-readable storage medium may be applied to the network device in the embodiments of the present disclosure, and the computer program causes a computer to execute the corresponding processes implemented by the network device in the various methods of the embodiments of the present disclosure, which are not repeated here for brevity.

An embodiment of the present disclosure also provides a computer program product, the computer program product includes a computer storage medium, the computer storage medium stores a computer program, the computer program includes instructions executable by at least one processor, and when the instructions are executed by the at least one processor, they implement the methods in the embodiments of the present disclosure.

In some embodiments, the computer program product may be applied to the terminal device in the embodiments of the present disclosure, and the computer program instructions cause a computer to execute the corresponding processes implemented by the terminal device in the various methods of the embodiments of the present disclosure, which are not repeated here for brevity.

In some embodiments, the computer program product may be applied to the network device in the embodiments of the present disclosure, and the computer program instructions cause a computer to execute the corresponding processes implemented by the network device in the various methods of the embodiments of the present disclosure, which are not repeated here for brevity.

An embodiment of the present disclosure also provides a computer program, which causes a computer to execute the methods in the embodiments of the present disclosure.

In some embodiments, the computer program may be applied to the terminal device in the embodiments of the present disclosure, and when the computer program runs on a computer, it causes the computer to execute the corresponding processes implemented by the terminal device in the various methods of the embodiments of the present disclosure, which are not repeated here for brevity.

In some embodiments, the computer program may be applied to the network device in the embodiments of the present disclosure, and when the computer program runs on a computer, it causes the computer to execute the corresponding processes implemented by the network device in the various methods of the embodiments of the present disclosure, which are not repeated here for brevity.

A person of ordinary skill in the art may be aware that, in combination with the examples of units and algorithm steps described in the embodiments disclosed herein, the present disclosure can be implemented by electronic hardware, or a combination of computer software and electronic hardware. Whether these functions are performed by hardware or software depends on the specific application and design constraints of the technical solution. A person skilled in the art may use different methods to implement the described functions for each specific application, but such implementation should not be considered as beyond the scope of the present disclosure.

A person skilled in the art can clearly understand that for the convenience and brevity of description, the specific working processes of the systems, apparatuses, and units described above can refer to the corresponding processes in the foregoing method embodiments, and details are not repeated here.

In the several embodiments provided in the present disclosure, it should be understood that the disclosed systems, apparatuses, and methods may be implemented in other ways. For example, the apparatus embodiments described above are only illustrative. For example, the division of the units is only a logical function division, and there may be other division manners in actual implementation. For example, multiple units or components may be combined or integrated into another system, or some features may be ignored or not executed. In addition, the mutual coupling or direct coupling or communication connection shown or discussed may be indirect coupling or communication connection through some interfaces, apparatuses, or units, and may be electrical, mechanical, or other forms.

The units described as separate components may or may not be physically separate, and components displayed as units may or may not be physical units, that is, they may be located in one place, or may be distributed over multiple network units. Some or all of the units may be selected according to actual needs to achieve the purpose of the solution of this embodiment.

In addition, each functional unit in each embodiment of the present disclosure may be integrated into one processing unit, or each unit may exist physically separately, or two or more units may be integrated into one unit.

If the functions are implemented in the form of software functional units and sold or used as independent products, they may be stored in a computer-readable storage medium. Based on this understanding, the technical solution of the present disclosure essentially, or the part contributing to the prior art, or the part of the technical solution, may be embodied in the form of a software product stored in a storage medium, including several instructions for causing a computer device (which may be a personal computer, a server, or a network device, etc.) to perform all or part of the steps of the methods described in the various embodiments of the present disclosure. The aforementioned storage medium includes various media that can store program codes, such as a U disk, a mobile hard disk, a read-only memory (ROM), a random access memory (RAM), a magnetic disk, or an optical disk.

The above description is only specific embodiments of the present disclosure, but the protection scope of the present disclosure is not limited thereto. Any person skilled in the art can easily conceive of changes or substitutions within the technical scope disclosed in the present disclosure, which should be covered within the protection scope of the present disclosure. Therefore, the protection scope of the present disclosure shall be subject to the protection scope of the claims.

## Claims

1. A communication method, comprising:
receiving first configuration information, wherein the first configuration information is used to configure a first uplink resource, and the first uplink resource comprises a first uplink resource set; and
sending a first uplink channel or signal through a target uplink resource in the first uplink resource set, wherein the first uplink channel or signal is used to request sending a first downlink channel or signal over a first downlink cell.

2. The method according to claim 1, wherein a quasi co-location (QCL) reference of the first downlink channel or signal is determined based on a second downlink channel or signal, the second downlink channel or signal is a downlink channel or signal on a second downlink cell; and
wherein the second downlink cell is the same as the first downlink cell; or the second downlink cell and the first downlink cell belong to a same cell group; or the second downlink cell is different from the first downlink cell.

3. The method according to claim 2, wherein the second downlink channel or signal comprises a synchronization signal block (SSB) on the second downlink cell; or the second downlink channel or signal comprises a downlink reference signal on the second downlink cell configured by first transmission configuration indication (TCI) state configuration information.

4. The method according to claim 3, wherein the downlink reference signal on the second downlink cell configured by the first TCI state configuration information comprises an SSB or a channel state information reference signal (CSI-RS).

5. The method according to claim 3 or 4, wherein the first configuration information comprises the first TCI state configuration information; or
in a case where the first TCI state configuration information is not configured, the second downlink channel or signal comprises an SSB on the second downlink cell.

6. The method according to any one of claims 3 to 5, wherein the first configuration information is used to configure the SSB on the second downlink cell; or
in a case where the SSB on the second downlink cell is not configured, the SSB on the second downlink cell is determined based on system message of the second downlink cell.

7. The method according to any one of claims 2 to 6, wherein the QCL reference of the first downlink channel or signal is determined based on one or more of:
a first mapping relationship between an index associated with the first downlink channel or signal and one or more uplink resources in the first uplink resource set;
a second mapping relationship between an index associated with the second downlink channel or signal and one or more uplink resources in the first uplink resource set;
a third mapping relationship between an index associated with the first downlink channel or signal and an index associated with the second downlink channel or signal; or
the first configuration information.

8. The method according to claim 7, wherein indexes associated with the first downlink channel or signal are sorted in ascending order of indexes.

9. The method according to claim 7 or 8, wherein indexes associated with the second downlink channel or signal are sorted in ascending order of indexes.

10. The method according to any one of claims 7 to 9, wherein sorting of the one or more uplink resources in the first uplink resource set comprises one or more of:
sorting in ascending order of indexes in a code domain;
sorting in ascending order of indexes in a frequency domain;
sorting in ascending order of indexes in a time domain; or
sorting in ascending order of indexes of a period.

11. The method according to any one of claims 7 to 10, wherein
the index associated with the first downlink channel or signal is an index which is associated with the target uplink resource and determined based on the first mapping relationship; or
the QCL reference of the first downlink channel or signal is an index associated with the second downlink channel or signal which is associated with the target uplink resource and determined based on the second mapping relationship; or
the QCL reference of the first downlink channel or signal is an index which is associated with the second downlink channel or signal and determined based on the third mapping relationship; or
the QCL reference of the first downlink channel or signal is configured by the first configuration information.

12. The method according to any one of claims 2 to 11, wherein the second downlink cell is a primary cell.

13. The method according to any one of claims 2 to 12, wherein in a case where the second downlink cell is different from the first downlink cell, the first configuration information is used to determine one or more of: an identifier of the second downlink cell, a cell group to which the second downlink cell belongs, or an association relationship between the first downlink cell and the second downlink cell.

14. The method according to any one of claims 2 to 13, wherein the first configuration information is further used to configure a second uplink resource, the second uplink resource comprises a second uplink resource set; and the method further comprises:
sending a second uplink channel or signal through one or more uplink resources in the second uplink resource set, wherein the second uplink channel or signal is used to request sending a third downlink channel or signal over a third downlink cell; wherein the third downlink cell is different from the first downlink cell.

15. The method according to any one of claims 2 to 13, wherein the first uplink resource further comprises a second uplink resource set; and the method further comprises:
sending a second uplink channel or signal through one or more uplink resources in the second uplink resource set, wherein the second uplink channel or signal is used to request sending a third downlink channel or signal over a third downlink cell; wherein the third downlink cell is different from the first downlink cell.

16. The method according to claim 14 or 15, wherein the third downlink cell and the first downlink cell belong to a same cell group, or the third downlink cell and the first downlink cell belong to different cell groups.

17. The method according to any one of claims 14 to 16, wherein the QCL reference of the third downlink channel or signal is determined based on the second downlink channel or signal; or
the QCL reference of the third downlink channel or signal is determined based on a fourth downlink channel or signal on the third downlink cell,
wherein the third downlink cell is different from the second downlink cell, and the third downlink cell and the second downlink cell belong to a same cell group.

18. The method according to claim 17, wherein the fourth downlink channel or signal comprises an SSB on the third downlink cell; or the fourth downlink channel or signal comprises a downlink reference signal on the third downlink cell configured by second TCI state configuration information.

19. The method according to any one of claims 14 to 18, wherein the first configuration information is used to determine one or more of: an identifier of the third downlink cell, a cell group to which the third downlink cell belongs, or an association relationship between the second uplink resource set and the third downlink cell.

20. The method according to any one of claims 1 to 19, wherein the first configuration information is used to determine one or more of: an identifier of the first downlink cell, a cell group to which the first downlink cell belongs, or an association relationship between the first uplink resource set and the first downlink cell.

21. The method according to any one of claims 1 to 20, wherein in a case where the target uplink resource comprises a plurality of uplink resources, the plurality of uplink resources in the target uplink resource are used to repeatedly send the first uplink channel or signal.

22. The method according to any one of claims 1 to 21, wherein the first downlink channel or signal comprises one or more of: synchronization signal block (SSB), channel state information reference signal (CSI-RS), tracking reference signal (TRS), positioning reference signal (PRS), or system message.

23. The method according to any one of claims 1 to 22, wherein the first uplink channel or signal comprises one or more of: physical random access channel (PRACH), message A (MsgA), physical uplink control channel (PUCCH), or configured grant physical uplink shared channel (CG-PUSCH).

24. The method according to any one of claims 1 to 23, wherein the first uplink resource is an uplink resource configured on an uplink cell; wherein the uplink cell is a primary cell; or the uplink cell is a secondary cell.

25. A communication method, comprising:
sending first configuration information, wherein the first configuration information is used to configure a first uplink resource, and the first uplink resource comprises a first uplink resource set; and
detecting a first uplink channel or signal in one or more uplink resources in the first uplink resource set, wherein the first uplink channel or signal is used to request sending a first downlink channel or signal over a first downlink cell.

26. The method according to claim 25, further comprising:
in a case where the first uplink channel or signal is detected on a target uplink resource in the first uplink resource set, sending the first downlink channel or signal over the first downlink cell.

27. The method according to claim 26, wherein a quasi co-location (QCL) reference of the first downlink channel or signal is determined based on a second downlink channel or signal, the second downlink channel or signal is a downlink channel or signal on a second downlink cell; and
wherein the second downlink cell is the same as the first downlink cell; or the second downlink cell and the first downlink cell belong to a same cell group; or the second downlink cell is different from the first downlink cell.

28. The method according to claim 27, wherein the second downlink channel or signal comprises a synchronization signal block (SSB) on the second downlink cell; or the second downlink channel or signal comprises a downlink reference signal on the second downlink cell configured by first transmission configuration indication (TCI) state configuration information.

29. The method according to claim 28, wherein the downlink reference signal on the second downlink cell configured by the first TCI state configuration information comprises an SSB or a channel state information reference signal (CSI-RS).

30. The method according to claim 28 or 29, wherein the first configuration information comprises the first TCI state configuration information; or
in a case where the first TCI state configuration information is not configured, the second downlink channel or signal comprises an SSB on the second downlink cell.

31. The method according to any one of claims 28 to 30, wherein the first configuration information is used to configure the SSB on the second downlink cell; or
in a case where the SSB on the second downlink cell is not configured, the SSB on the second downlink cell is determined based on system message of the second downlink cell.

32. The method according to any one of claims 27 to 31, wherein the QCL reference of the first downlink channel or signal is determined based on one or more of:
a first mapping relationship between an index associated with the first downlink channel or signal and one or more uplink resources in the first uplink resource set;
a second mapping relationship between an index associated with the second downlink channel or signal and one or more uplink resources in the first uplink resource set;
a third mapping relationship between an index associated with the first downlink channel or signal and an index associated with the second downlink channel or signal; or
the first configuration information.

33. The method according to claim 32, wherein indexes associated with the first downlink channel or signal are sorted in ascending order of indexes.

34. The method according to claim 32 or 33, wherein indexes associated with the second downlink channel or signal are sorted in ascending order of indexes.

35. The method according to any one of claims 32 to 34, wherein sorting of the one or more uplink resources in the first uplink resource set comprises one or more of:
sorting in ascending order of indexes in a code domain;
sorting in ascending order of indexes in a frequency domain;
sorting in ascending order of indexes in a time domain; or
sorting in ascending order of indexes of a period.

36. The method according to any one of claims 32 to 35, wherein
the index associated with the first downlink channel or signal is an index which is associated with the target uplink resource and determined based on the first mapping relationship; or
the QCL reference of the first downlink channel or signal is an index associated with the second downlink channel or signal which is associated with the target uplink resource and determined based on the second mapping relationship; or
the QCL reference of the first downlink channel or signal is an index which is associated with the second downlink channel or signal and determined based on the third mapping relationship; or
the QCL reference of the first downlink channel or signal is configured by the first configuration information.

37. The method according to any one of claims 27 to 36, wherein the second downlink cell is a primary cell.

38. The method according to any one of claims 27 to 37, wherein in a case where the second downlink cell is different from the first downlink cell, the first configuration information is used to determine one or more of: an identifier of the second downlink cell, a cell group to which the second downlink cell belongs, or an association relationship between the first downlink cell and the second downlink cell.

39. The method according to any one of claims 27 to 38, wherein the first configuration information is further used to configure a second uplink resource, the second uplink resource comprises a second uplink resource set; and the method further comprises:
detecting a second uplink channel or signal in one or more uplink resources in the second uplink resource set, wherein the second uplink channel or signal is used to request sending a third downlink channel or signal over a third downlink cell; wherein the third downlink cell is different from the first downlink cell.

40. The method according to any one of claims 27 to 38, wherein the first uplink resource further comprises a second uplink resource set; and the method further comprises:
detecting a second uplink channel or signal in one or more uplink resources in the second uplink resource set, wherein the second uplink channel or signal is used to request sending a third downlink channel or signal over a third downlink cell; wherein the third downlink cell is different from the first downlink cell.

41. The method according to claim 39 or 40, further comprising:
in a case wherein the second uplink channel or signal is detected on one or more uplink resources in the second uplink resource set, sending the third downlink channel or signal over the third downlink cell.

42. The method according to claim 39 or 41, wherein the third downlink cell and the first downlink cell belong to a same cell group, or the third downlink cell and the first downlink cell belong to different cell groups.

43. The method according to any one of claims 39 to 42, wherein the QCL reference of the third downlink channel or signal is determined based on the second downlink channel or signal; or
the QCL reference of the third downlink channel or signal is determined based on a fourth downlink channel or signal on the third downlink cell,
wherein the third downlink cell is different from the second downlink cell, and the third downlink cell and the second downlink cell belong to a same cell group.

44. The method according to claim 43, wherein the fourth downlink channel or signal comprises an SSB on the third downlink cell; or the fourth downlink channel or signal comprises a downlink reference signal on the third downlink cell configured by second TCI state configuration information.

45. The method according to any one of claims 39 to 44, wherein the first configuration information is used to determine one or more of: an identifier of the third downlink cell, a cell group to which the third downlink cell belongs, or an association relationship between the second uplink resource set and the third downlink cell.

46. The method according to any one of claims 25 to 45, wherein the first configuration information is used to determine one or more of: an identifier of the first downlink cell, a cell group to which the first downlink cell belongs, or an association relationship between the first uplink resource set and the first downlink cell.

47. The method according to any one of claims 25 to 46, wherein the first downlink channel or signal comprises one or more of: synchronization signal block (SSB), channel state information reference signal (CSI-RS), tracking reference signal (TRS), positioning reference signal (PRS), or system message.

48. The method according to any one of claims 25 to 47, wherein the first uplink channel or signal comprises one or more of: physical random access channel (PRACH), message A (MsgA), physical uplink control channel (PUCCH), or configured grant physical uplink shared channel (CG-PUSCH).

49. The method according to any one of claims 25 to 48, wherein the first uplink resource is an uplink resource configured on an uplink cell; wherein the uplink cell is a primary cell; or the uplink cell is a secondary cell.

50. A communication apparatus, applied to a terminal device, the apparatus comprising:
a first receiving unit, configured to receive first configuration information, wherein the first configuration information is used to configure a first uplink resource, and the first uplink resource comprises a first uplink resource set;
a first sending unit, configured to send a first uplink channel or signal through a target uplink resource in the first uplink resource set, wherein the first uplink channel or signal is used to request sending a first downlink channel or signal over a first downlink cell.

51. A communication apparatus, applied to a network device, the apparatus comprising:
a second sending unit, configured to send first configuration information, wherein the first configuration information is used to configure a first uplink resource, and the first uplink resource comprises a first uplink resource set;
a processing unit, configured to detect a first uplink channel or signal on one or more uplink resources in the first uplink resource set, wherein the first uplink channel or signal is used to request sending a first downlink channel or signal over a first downlink cell.

52. A communication device, comprising:
a memory, configured to store computer-executable instructions;
a processor, connected to the memory, configured to implement the method according to any one of claims 1 to 24, or implement the method according to any one of claims 25 to 49 by executing the computer-executable instructions.

53. A chip, comprising:
a processor, configured to call and run a computer program from a memory, so that a device on which the chip is installed executes the method according to any one of claims 1 to 24, or executes the method according to any one of claims 25 to 49.

54. A computer-readable storage medium having stored thereon a computer program that when executed by at least one processor, implements the method according to any one of claims 1 to 24, or implements the method according to any one of claims 25 to 49.

55. A computer program product comprising a computer storage medium having stored thereon a computer program comprising instructions executable by at least one processor, wherein when the instructions are executed by the at least one processor, the instructions implement the method according to any one of claims 1 to 24, or implement the method according to any one of claims 25 to 49.

56. A computer program, for causing a computer to execute the method according to any one of claims 1 to 24, or to implement the method according to any one of claims 25 to 49.
